# EUROPÄISCHE PATENTSCHRIFT

(11) **EP 3 822 019 B1**
(45) Veröffentlichungstag und Bekanntmachung des Hinweises auf die Patenterteilung: **10.01.2024**
(21) Anmeldenummer: 19209603.0
(22) Anmeldetag: 15.11.2019
(51) Int. Cl.: B23K 20/12, B33Y 10/00, B33Y 30/00, B29C 64/00

(54) **VORRICHTUNG UND VERFAHREN ZUM AUFBRINGEN EINER MATERIALSCHICHT AUF EINEN OBERFLÄCHENBEREICH EINES WERKSTÜCKS**
DEVICE AND METHOD FOR APPLYING A MATERIAL LAYER TO A SURFACE AREA OF A WORKPIECE
DISPOSITIF ET PROCÉDÉ D'APPLICATION D'UNE COUCHE DE MATÉRIAU À UNE ZONE DE SURFACE D'UNE PIÈCE

(43) Veröffentlichungstag der Anmeldung: 19.05.2021
(73) Patentinhaber: Helmholtz-Zentrum hereon GmbH, 21502 Geesthacht (DE)
(72) Erfinder: ROOS, Arne, 21035 Hamburg (DE); BERGMANN, Luciano, 21502 Geesthacht (DE); DOS SANTOS, Jorge Fernandez, 21395 Tespe (DE); LOITZ, Henry, 22159 Hamburg (DE)
(74) Vertreter: Bird & Bird LLP - Hamburg

(56) Entgegenhaltungen:
- EP-A1- 1 952 931
- EP-A1- 3 415 299
- US-A1- 2012 279 441

## Beschreibung

Die vorliegende Erfindung betrifft eine Vorrichtung und ein Verfahren zum Aufbringen einer Materialschicht auf einen Oberflächenbereich eines Werkstücks.

Verfahren zum Bilden einer Schicht auf einem Substrat oder Werkstück sowie Vorrichtungen zum Ausführen derartiger Verfahren sind aus dem Stand der Technik bekannt. Beispielsweise kann eine Schicht auf einem Werkstück in der Weise gebildet werden, dass ein das Auftragsmaterial bildender Rohling drehend angetrieben und mit dessen Stirnfläche in Kontakt mit dem Werkstück gebracht wird, sodass Reibung zwischen dem Rohling und dem Substrat erzeugt wird. Durch diese Reibung wird ein Abschnitt des Rohlings plastifiziert und das Material des Rohlings wird auf einem Oberflächenbereich des Werkstücks aufgetragen, wenn der Rohling über den Oberflächenbereich bewegt wird. Der sich drehende Rohling kann insbesondere entlang einer Bahn über den Oberflächenbereich bewegt werden, sodass nach und nach Rohlingmaterial auf dem Oberflächenbereich aufgetragen und somit die Schicht auf dem Werkstück gebildet wird. Derartige Verfahren sind auch als Reibauftragschweißverfahren bekannt.

Bei einem derartigen Verfahren ist es nachteilig, dass die erforderliche Rotation des Rohlings bei bestimmten Rohlingen technisch schwierig bis unmöglich zu realisieren ist. Dies ist insbesondere für Rohlinge, die als lange Stäbe ausgebildet sind oder in Rollenform vorliegen, sowie bei hohen erforderlichen Drehzahlen der Fall. Daher kommt das zuvor beschriebene Reibauftragschweißen für bestimmte Auftragsmaterialien nicht in Frage.

Ferner behindert die notwendige Rotation des Rohlings eine kontinuierliche Zuführung von Auftragsmaterial und reduziert somit die Geschwindigkeit, mit der die Schicht auf den Oberflächenbereich aufgetragen wird.

Schließlich scheidet das zuvor beschriebene Verfahren für solche Auftragsmaterialien vollständig aus, die in Stabform nicht ausreichend fest sind, sodass ein Stab drehend angetrieben und über an der Stirnfläche eingetragene Reibungsenergie plastifiziert werden kann. Ferner können mit dem Reibauftragschweißverfahren auch keine Schichten solcher Materialien aufgebracht werden, die zu porös sind, um in eine Stabform gebracht zu werden.

Wie aus Fig. 2B der EP 3 415 299 A1 zu erkennen ist, offenbart diese Veröffentlichung eine Vorrichtung zum Auftragen von Material, das in Form eines Drahts zugeführt wird, auf ein Werkstück, wobei die Führung des Drahts sowie die den Draht (34) aufnehmende Rolle gegenüber einer Basis drehend angetrieben sind. Dadurch reibt das freie Ende des Drahts auf der Oberfläche des Werkstücks, wobei durch diese Reibung der Draht plastifiziert wird. Die EP 1 952 931 A1 beschreibt unter Bezugnahme auf deren Fig. 2 eine Vorrichtung zum Auftragen einer Materialschicht auf eine Turbinenschaufel. Dabei ist in der Vorrichtung ein Zuführkanal zum Zuführen des Materials der Materialschicht in Pulverform vorgesehen, und das gesamte, der Werkstückoberfläche zugewandte Ende der Vorrichtung ist drehend angetrieben.

Es ist daher die Aufgabe der vorliegenden Erfindung, eine eingangs beschriebene Vorrichtung sowie ein entsprechendes Verfahren bereitzustellen, die eine einfache Zuführung von Auftragsmaterial ermöglichen. Insbesondere ist es wünschenswert, dass es nicht auf die Festigkeit des Auftragsmaterials in Stabform ankommt.

Gemäß einem ersten Aspekt der vorliegenden Erfindung wird diese Aufgabe durch eine Vorrichtung zum Aufbringen einer Materialschicht auf einen Oberflächenbereich eines Werkstücks gelöst mit einer Halteeinrichtung zur Aufnahme des Werkstücks
- mit einer Auftragseinrichtung, wobei die Auftragseinrichtung und die Halteeinrichtung relativ zueinander bewegt werden können,
- wobei die Halteeinrichtung derart ausgestaltet ist, dass das Werkstück derart an der Halteeinrichtung gehaltert ist, dass der Oberflächenbereich des Werkstücks zu der Auftragseinrichtung weist,
- wobei die Auftragseinrichtung eine Basis aufweist,
- wobei die Auftragseinrichtung eine um eine Längsachse relativ zur Basis drehend angetriebene Hohlschulter aufweist,
- wobei die Hohlschulter eine zu einer senkrecht zu der Längsachse verlaufenden Werkstückebene weisende Vertiefung aufweist, die von einer um die Längsachse umlaufenden Ringfläche begrenzt ist,
- wobei die Hohlschulter mit einer entlang der Längsachse verlaufenden Durchgangsöffnung versehen ist, deren Durchmesser kleiner als der der Vertiefung ist,
- wobei die Auftragseinrichtung eine Zuführeinrichtung für Auftragsmaterial aufweist, die auf der von der Werkstückebene wegweisenden Seite der Hohlschulter so angeordnet ist, dass Auftragsmaterial von der Zuführeinrichtung durch die Durchgangsöffnung in die Vertiefung eingebracht werden kann,
- wobei die Auftragseinrichtung und die Halteeinrichtung derart relativ zueinander bewegt werden können, dass während der Relativbewegung die Werkstückebene in dem Punkt tangential zu dem Oberflächenbereich des Werkstücks verläuft, in dem die Längsachse die Oberfläche des Werkstücks schneidet, und
- wobei die Hohlschulter eine Reibfläche aufweist, die zwischen der Ringfläche und der Durchgangsöffnung angeordnet ist, wobei die Reibfläche die Durchgangsöffnung umgibt, so dass einem in die Vertiefung eingebrachten Auftragsmaterial durch eine Rotation der Hohlschulter, aufgrund der Reibung zwischen Hohlschulter und Auftragsmaterial, kontinuierlich Reibungsenergie zugeführt wird, sodass durch diese Energiezufuhr das Auftragsmaterial in der Vertiefung plastifiziert wird.

Mit der erfindungsgemäßen Vorrichtung kann eine zusätzliche Materialschicht auf einem Oberflächenbereich eines Werkstücks in der folgenden Weise aufgetragen werden.

Die erfindungsgemäße Vorrichtung weist dazu eine Auftragseinrichtung mit einer Basis auf, wobei die Basis in einer bevorzugten Ausführungsform wiederum beweglich an einem Maschinenrahmen der erfindungsgemäßen Vorrichtung befestigt sein kann. Außerdem weist die Vorrichtung eine Halteeinrichtung auf, die in bevorzugter Weise ebenfalls an dem Maschinenrahmen verfahrbar angebracht ist und mit der ferner das Werkstück gehaltert wird. Die Auftragseinrichtung weist eine mit einer Vertiefung versehene, drehend angetriebene Hohlschulter auf, und die Auftragseinrichtung kann so hin zu dem zu beschichtenden Oberflächenbereich des Werkstücks bewegt werden, dass die Hohlschulter mit dieser Vertiefung diesem Oberflächenbereich des Werkstücks unmittelbar gegenüber liegt.

In die Vertiefung, die nach außen von einer Ringfläche begrenzt ist, wird Auftragsmaterial eingebracht, und durch die Rotation der Hohlschulter wird dem Auftragsmaterial, aufgrund der Reibung zwischen Hohlschulter und Auftragsmaterial, kontinuierlich Reibungsenergie zugeführt werden. Durch diese Energiezufuhr wird das Auftragsmaterial in der Vertiefung plastifiziert.

Die Auftragseinrichtung kann nun, da die Auftragseinrichtung und die Haltereinrichtung relativ zueinander beweglich sind, so entlang des zu beschichtenden Oberflächenbereichs des Werkstücks bewegt werden, dass die Werkstückebene der Auftragseinrichtung, die sich senkrecht zu der Längsachse und damit der Drehachse der Hohlschulter erstreckt, immer tangential zum Oberflächenbereich des Werkstücks verläuft.

Die Werkstückebene wird durch die Lage der Längsachse der Auftragseinrichtung und damit der Drehachse der Hohlschulter bestimmt und verläuft senkrecht zu dieser Drehachse. Außerdem ist die Ringfläche, die die Vertiefung in der Hohlschulter umgibt, vorzugsweise so ausgestaltet, dass sie sich parallel zu der Werkstückebene erstreckt.

Wenn die Auftragseinrichtung und die Halteeinrichtung zum Aufbringen der Schicht relativ zueinander bewegt werden, erfolgt dies erfindungsgemäß in der Weise, dass während der Relativbewegung die Werkstückebene in dem Punkt tangential zu dem Oberflächenbereich des Werkstücks verläuft, in dem die Längsachse die Oberfläche des Werkstücks schneidet. Damit wird auch bei gekrümmten Oberflächenbereichen sichergestellt, dass die Hohlschulter richtig zu dem Oberflächenbereich ausgerichtet ist.

Im einfachsten Fall eines ebenen Werkstücks wird dies dadurch erreicht, dass die Hohlschulter bzw. die Auftragseinrichtung parallel zur Oberfläche verschoben wird. Dann ist die Werkstückebene immer in dem Punkt tangential zu dem Oberflächenbereich des Werkstücks, in dem die Längsachse die Oberfläche des Werkstücks schneidet.

Bei der Relativbewegung ist die Ringfläche der Hohlschulter im geringen Umfang von dem Oberflächenbereich und damit der Werkstückebene beabstandet, so dass ein Spalt zwischen Hohlschulter einerseits und Oberflächenbereich andererseits verbleibt. Durch diesen Spalt wird plastifiziertes Material aus der Vertiefung herausgedrückt, wenn die Auftragseinrichtung verschoben und zusätzlich weiteres Auftragsmaterial durch die sich parallel zur Längsachse und damit zur Drehachse der Hohlschulter erstreckende Durchgangsöffnung in die Vertiefung hineingefördert wird. Dieses zusätzliche Auftragsmaterial wird aufgrund des kontinuierlichen Eintrags von Reibungsenergie durch den Kontakt der sich drehenden Hohlschulter mit dem plastifizierten Material ebenfalls plastifiziert, so dass der Abfluss von plastifizierten Material aufgrund der Bewegung der Auftragseinrichtung über dem Oberflächenbereich des Werkstücks durch das neu hinzugefügte zusätzliche zunächst feste Auftragsmaterial ausgeglichen wird.

Da sich die Durchgangsöffnung entlang der Längsachse und damit der Drehachse erstreckt, ist es nicht erforderlich, dass das Auftragsmaterial in Stabform vorliegt und insbesondere auch rotiert werden muss. Vielmehr kann das Auftragsmaterial drehfest relativ zu der Basis der Auftragseinrichtung gehaltert sein, muss auf jedem Fall aber nicht rotiert werden. Darüber hinaus ist es auch möglich, dass das Auftragsmaterial gar nicht in Stabform vorliegt, sondern nur pulverförmig der Durchgangsöffnung zugeführt wird.

Demnach ist es bei der erfindungsgemäßen Vorrichtung nicht mehr erforderlich, das Auftragsmaterial in fester Stabform vorzusehen, wie dies bei herkömmlichen Reibauftragschweißverfahren der Fall ist. Vielmehr ist bei der erfindungsgemäßen Vorrichtung eine viel größere Flexibilität in Hinblick auf das Auftragsmaterial gegeben.

In einer bevorzugten Ausführungsform ist die Hohlschulter derart ausgestaltet, dass die Ringfläche, die die Hohlschulter nach außen begrenzt, parallel zu der Werkstückebene verläuft. Dies stellt sicher, dass bei rotierenden Hohlschultern ein gleichmäßiger Spalt zwischen dem Rand der Hohlschulter einerseits und dem Oberflächenbereich des Werkstücks andererseits, in dem die Werkstückebene verläuft, vorgesehen ist. Dadurch wird ein kontinuierlicher und gleichmäßiger Auftrag des plastifizierten Materials auf die Werkstückoberfläche ermöglicht.

Weiterhin ist es bevorzugt, wenn die Auftragseinrichtung und die Haltereinrichtung derart ausgestaltet sind, dass die Ringfläche von der Werkstückebene beabstandet ist, wenn die Auftragseinrichtung und die Haltereinrichtung relativ zueinander bewegt werden. Durch diesen Abstand wird der Spalt vorgegeben, durch den das plastifizierte Material aus der Vertiefung in der Hohlschulter herausgedrückt wird und die Schicht auf dem Oberflächenbereich des Werkstücks bildet.

Weiterhin ist es bevorzugt, dass der Bereich der Oberfläche der Hohlschulter, der zwischen der Ringfläche und der Durchgangsöffnung vorgesehen ist und die Vertiefung begrenzt, als eine umlaufende Reibfläche ausgebildet ist. Diese die Durchgangsöffnung umgebende Reibfläche sorgt dafür, dass Reibungsenergie aufgrund des drehenden Antriebs der Hohlschulter effizient in das sich in der Vertiefung befindliches Auftragsmaterial eingetragen wird.

In einer weiteren bevorzugten Ausführungsform ist die Zuführeinrichtung, mit der das Auftragsmaterial zu der Durchgangsöffnung und weiter durch diese hindurch in die Vertiefung geführt wird, durch ein oder mehrere Führungselemente gebildet, die damit einen Förderweg für stabförmig ausgebildetes Auftragsmaterial bilden. Dabei erstreckt sich der Förderweg entlang der Längsachse, um die auch die Hohlschulter drehend angetrieben wird. Auf diese Weise kann einfach und sicher stabförmig ausgebildetes Auftragsmaterial in den Bereich der Vertiefung gefördert werden.

Insbesondere kann bei dieser bevorzugten Ausführungsform das wenigstens eine Führungselement als ein Radiallager ausgebildet sein, dessen Außenring fest an der Basis oder auch an der Hohlschulter gehaltert ist, während das stabförmige Material durch den Innenring geführt wird, der zu der Durchgangsöffnung ausgerichtet ist.

In diesem Fall wird ermöglicht, dass der Innenring drehfest gegenüber der Basis der Auftragseinrichtung verbleibt und damit das Auftragsmaterial, das stabförmig ausgebildet sein kann, ebenfalls drehfest zur Basis verbleiben kann.

Alternativ ist es in einer weiteren bevorzugten Ausführungsform auch möglich, dass die Zuführeinrichtung als Zuführkanal ausgebildet ist, der einen Einlass sowie einen Auslass aufweist und vorzugsweise drehfest an der Basis der Auftragseinrichtung gehaltert ist. Der Auslass ist zu der Durchgangsöffnung in der Hohlschulter ausgerichtet und vorzugsweise auf der von der Werkstückebene wegweisenden Breite der Hohlschulter unmittelbar angrenzend an diese angeordnet. Bei dieser Ausführungsform kann pulverförmiges Auftragsmaterial einfach in den Bereich der Vertiefung der Hohlschulter geführt werden.

In einer weiteren bevorzugten Ausführungsform weist die Vorrichtung ein Kragenelement auf, wobei das Kragenelement eine Auflagefläche aufweist, die in der Werkstückebene verläuft, wobei der äußere Umfang der Hohlschulter, zumindest benachbart zu der Ringfläche, einen kreisförmigen Querschnitt hat und wobei sich ein Abschnitt des Kragenelements um den äußeren Umfang der Hohlschulter, vorzugsweise über einen Winkel von 180°, herum erstreckt. Vorzugsweise ist das Kragenelement um die Längsachse schwenkbar an der Basis der Auftragseinrichtung angebracht. Weiterhin kann das Kragenelement zusätzlich zwei Arme aufweisen, die parallel zueinander verlaufen und sich von den Enden des Abschnitts des Kragenelements, der um die Hohlschulter herum verläuft, weg erstrecken.

Während der Bewegung der Auftragseinrichtung relativ zu dem Oberflächenbereich kann das Kragenelement mit seiner Auflagefläche auf dem Oberflächenbereich aufliegen und so ausgerichtet sein, dass der von dem Kragenelement umschlossene Bereich der Hohlschulter in die Richtung weist, in die sich die Auftragseinrichtung über den Oberflächenbereich bewegt. Wenn beim Bewegen der Auftragseinrichtung über den Oberflächenbereich die Ringfläche beabstandet von dem Oberflächenbereich ist und die Hohlschulter rotierend angetrieben ist, sodass Auftragsmaterial in der Vertiefung plastifiziert wird, wird durch das Kragenelement erreicht, dass plastifiziertes Material nur in den Bereichen unter der Ringfläche hindurch aus der Vertiefung austritt, die entgegen der Bewegungsrichtung ausgerichtet sind. Wenn das Kragenelement sich über 180° erstreckt, wird dabei ein Streifen aufgetragen, dessen Breite im Wesentlichen dem Durchmesser der Hohlschulter entspricht. Wenn zusätzlich die Arme vorgesehen sind, wird die Breite des Streifens auf den Abstand der Arme begrenzt. Somit lässt sich bei dieser Ausführungsform ein Streifen von vorgegebener Breite erzeugen. Wenn das Kragenelement weiterhin um die Längsachse der Auftragseinrichtung schwenkbar an der Basis angebracht ist, kann es sich immer so ausrichten, dass der die Hohlschulter umgebende Abschnitt des Kragenelements in die Richtung weist, in der sich die Hohlschulter relativ zum Oberflächenbereich des Werkstücks bewegt. In einer weiteren bevorzugten Ausführungsform kann an der Haltereinrichtung ein Reibelement vorgesehen sein, dass um eine Drehachse drehend angetrieben ist. Die Auftragseinrichtung kann derart relativ zu dem Reibelement ausgerichtet werden, dass die Drehachse dabei derart angeordnet ist, dass sie senkrecht zu der Werkstückebene verläuft, wenn die Längsachse das Reibelement schneidet und die Werkstückebene mit der Oberfläche des Reibelements zusammenfällt. Ferner ist das Reibelement derart an der Haltereinrichtung angeordnet, dass die Oberfläche des Reibelements so unmittelbar an dem Oberflächenbereich eines an der Halteeinrichtung aufgenommenen Werkstücks angrenzt, dass die Tangentialebenen der Oberfläche des Reibelements und des Oberflächenbereichs an der Grenze zwischen Oberflächenbereich und Oberfläche des Reibelements zusammenfallen.

Dies ermöglicht, dass die Auftragseinrichtung zunächst mit ihrer Basis so relativ zu der Halteeinrichtung bewegt wird, dass die Werkstückebene in der Oberfläche des Reibelements verläuft oder die Ringfläche, die die Vertiefung in der Hohlschulter begrenzt, unmittelbar auf dem Reibelement aufliegt. Dies wird dadurch erreicht, dass die Drehachse so ausgerichtet ist, dass sie senkrecht zu der Werkstückebene verläuft, wenn die Längsachse das Reibelement schneidet und die Werkstückebene mit der Oberfläche des Reibelements zusammenfällt.

Vorzugsweise rotieren Hohlschulter und Reibelement mit derselben Geschwindigkeit, so dass es nicht zu einer Reibung zwischen Ringfläche einerseits und Reibelement andererseits kommt. Während das Reibelement rotiert wird, wird Auftragsmaterial durch die Durchgangsöffnung in die Vertiefung geführt, wobei es dabei zu Reibung zwischen dem Auftragsmaterial einerseits und dem Reibelement sowie der Reibfläche an der Hohlschulter andererseits kommt. Dadurch wird das in die Vertiefung eingebrachte Auftragsmaterial aufgrund des Eintrags von Reibungsenergie plastifiziert. Anschließend kann dann die Auftragseinrichtung, wenn die Vertiefung vollständig mit plastifiziertem Material gefüllt ist, von dem Reibelement herunter auf den Oberflächenbereich des zu beschichtenden Werkstücks bewegt werden, so dass dann das plastifizierte Material, wenn ein Spalt zwischen Ringfläche einerseits und Oberflächenbereich andererseits eingestellt wird, auf dem Oberflächenbereich aufgetragen werden kann.

Das Vorsehen eines solchen drehend angetriebenen Reibelements ermöglicht es, in einfacher Weise zunächst die Vertiefung in der Hohlschulter mit plastifiziertem Auftragsmaterial zu füllen und dann den Beschichtungsprozess auf dem Oberflächenbereich des Werkstücks zu beginnen.

Gemäß einem weiteren Aspekt der vorliegenden Erfindung wird die obige Aufgabe durch ein Verfahren zum Aufbringen einer Materialschicht auf einem Oberflächenbereich eines Werkstücks gelöst, wobei eine Auftragseinrichtung verwendet wird, die eine um eine Längsachse relativ zur Basis drehbare Hohlschulter aufweist, wobei die Hohlschulter eine zu einer senkrecht zu der Längsachse verlaufenden Werkstückebene weisende Vertiefung aufweist, die von einer um die Längsachse umlaufenden Rennfläche begrenzt ist, und wobei die Hohlschulter mit einer entlang der Längsachse verlaufenden Durchgangsöffnung versehen ist, deren Durchmesser kleiner als der der Vertiefung ist. Bei dem Verfahren wird die Hohlschulter drehend angetrieben, wobei Auftragsmaterial durch die Durchgangsöffnung in die Vertiefung geführt wird, und wobei das zugeführte Auftragsmaterial in der Vertiefung plastifiziert wird. Ferner wird die Auftragseinrichtung derart über den Oberflächenbereich des Werkstücks bewegt, dass die Vertiefung zu dem Oberflächenbereich weist und die Werkstückebene in dem Punkt, in dem die Längsachse den Oberflächenbereich schneidet, tangential zu dem Oberflächenbereich verläuft und dass die Ringfläche beabstandet zu dem Oberflächenbereich ist, so dass plastifiziertes Auftragsmaterial auf dem Oberflächenbereich abgeschieden wird. Schließlich weist die Hohlschulter eine Reibfläche auf, die zwischen der Ringfläche und der Durchgangsöffnung angeordnet ist, wobei die Reibfläche die Durchgangsöffnung umgibt, so dass dem in die Vertiefung eingebrachten Auftragsmaterial durch die Rotation der Hohlschulter, aufgrund der Reibung zwischen Hohlschulter und Auftragsmaterial, kontinuierlich Reibungsenergie zugeführt wird, sodass durch diese Energiezufuhr das Auftragsmaterial in der Vertiefung plastifiziert wird.

Ähnlich wie bei der erfindungsgemäßen Vorrichtung wird auch bei dem erfindungsgemäßen Verfahren Auftragsmaterial, dass durch die Durchgangsöffnung in die Vertiefung der Hohlschulter eingebracht wird, aufgrund von deren Rotation und dem Eintrag von Reibungsenergie in das Auftragsmaterial innerhalb der Vertiefung plastifiziert. Dieses plastifizierte Material wird dann, wenn die Auftragseinrichtung über den Oberflächenbereich des Werkstücks bewegt wird und die die Vertiefung begrenzende Ringfläche von dem Oberflächenbereich beabstandet ist, aus der Vertiefung herausgedrückt und auf dem Oberflächenbereich abgeschieden. Das Auftragsmaterial, dass in die Vertiefung zugeführt wird, bewirkt also zum einen, dass plastifiziertes Auftragsmaterial durch den Spalt zwischen Ringfläche und Oberflächenbereich herausgedrückt und damit auf der Oberfläche abgeschieden wird und gleichzeitig dort durch das zugeführte Auftragsmaterial das abgeschiedene Material ersetzt.

Auch im Falle des erfindungsgemäßen Verfahrens ist es nicht erforderlich, dass das Auftragsmaterial selbst rotiert oder anderweitig drehend angetrieben wird. Vielmehr ist es ausreichend, dass die Hohlschulter, die in Reibkontakt mit dem Auftragsmaterial steht, rotiert wird und dass auf diese Weise ein Energieeintrag hin zu dem Auftragsmaterial erfolgt.

In einer bevorzugten Ausführungsform des erfindungsgemäßen Verfahrens ist auf dem Oberflächenbereich des Werkstücks ein Zusatzelement befestigt, das vorzugsweise aus dem Auftragsmaterial gebildet ist, aber auch aus einem anderen Material gebildet sein kann. Die Auftragseinrichtung wird, bevor sie über den Oberflächenbereich des Werkstücks bewegt wird, so auf den Oberflächenbereich aufgesetzt, dass das Zusatzelement in der Vertiefung aufgenommen wird, sodass es an der Hohlschulter anliegt. Die Hohlschulter wird drehend angetrieben, so dass sie an dem Zusatzelement reibt und das Zusatzelement plastifiziert wird, wobei dann, wenn das Zusatzelement plastifiziert ist, Auftragsmaterial durch die Durchgangsöffnung in die Vertiefung geführt wird und die Auftragseinrichtung über dem Oberflächenbereich des Werkstücks bewegt wird.

Bei diesem bevorzugtem Ausführungsbeispiel wird somit die Vertiefung in der Hohlschulter zunächst dadurch mit plastifiziertem Material befüllt, dass die Hohlschulter auf ein Zusatzelement aufgesetzt wird, dass auf der Oberfläche des Werkstücks im Oberflächenbereich angeordnet ist. Die Hohlschulter reibt an dem Zusatzelement, sodass Reibungsenergie in das Zusatzelement eingetragen und dieses plastifiziert wird. Wenn die Hohlschulter mit dem entsprechenden Zusatzmaterial gefüllt ist, wird die Auftragseinrichtung über den Oberflächenbereich geführt, wobei dann die an der Hohlschulter vorgesehene Ringfläche von dem Oberflächenbereich beabstandet ist und parallel Auftragsmaterial durch die Durchgangsöffnung in die Vertiefung hinzugeführt wird. Durch das Zuführen weiteren Auftragsmaterials wird Auftragsmaterial durch den Spalt zwischen Ringfläche und Oberflächenbereich herausgedrückt, während die Auftragseinrichtung über den Oberflächenbereich bewegt wird. Auf diese Weise wird Auftragsmaterial auf der Oberfläche abgeschieden.

Bei einer alternativen Ausgestaltung des erfindungsgemäßen Verfahrens ist, wie bereits im Zusammenhang mit der erfindungsgemäßen Vorrichtung beschrieben, ein Reibelement vorgesehen, dass um eine Drehachse drehend angetrieben wird. Die Auftragseinrichtung kann derart relativ zu dem Reibelement ausgerichtet werden, dass die Drehachse derart angeordnet ist, dass sie senkrecht zu der Werkstückebene verläuft, wenn die Längsachse das Reibelement schneidet und die Werkstückebene mit der Oberfläche des Reibelements zusammenfällt. Die Oberfläche des Reibelements grenzt ferner unmittelbar an den Oberflächenbereich des Werkstücks an, so dass die Tangentialebenen der Oberfläche des Reibelements und des Oberflächenbereichs an der Grenze zwischen Oberflächenbereich und Oberfläche des Reibelements zusammenfallen. Die Auftragseinrichtung wird, bevor die Auftragseinrichtung über den Oberflächenbereich des Werkstücks bewegt wird, auf das Reibelement aufgesetzt, so dass in die Vertiefung geführtes Auftragsmaterial in Reibkontakt mit dem Reibelement gelangt und das Auftragsmaterial plastifiziert wird. Wenn die Vertiefung mit plastifiziertem Auftragsmaterial gefüllt ist, wird die Auftragseinrichtung über den Oberflächenbereich des Werkstücks bewegt, und Auftragsmaterial wird durch die Durchgangsöffnung weiter in die Vertiefung geführt.

In diesem Fall wird also die Vertiefung zunächst in der Weise mit plastifiziertem Material aufgefüllt, dass die Auftragseinrichtung mit der Hohlschulter über einem drehend angetriebenen Reibelement aufgesetzt wird und dann Auftragsmaterial durch die Durchgangsöffnung in die Vertiefung geführt wird, wobei das Auftragsmaterial durch den Reibkontakt mit dem sich drehenden Reibelement plastifiziert wird. Es wird dann so lange Auftragsmaterial zugeführt, bis die Vertiefung mit plastifiziertem Auftragsmaterial befüllt ist. Dieses wird dadurch, dass die Hohlschulter drehend angetrieben wird und damit im Reibkontakt mit dem reizplastifiziertem Auftragsmaterial steht, im plastifiziertem Zustand gehalten. Anschließend, wenn die Vertiefung vollständig befüllt ist, kann die Auftragseinrichtung in der bereits beschriebenen Weise über den Oberflächenbereich bewegt werden, wobei ein Spalt zwischen Ringfläche und Oberflächenbereich vorgesehen wird, durch den dann bei weiterem Zuführen von Auftragsmaterial durch die Durchgangsöffnung das plastifizierte Material aus der Vertiefung austreten und auf der Oberflächenbereich abgeschieden werden kann.

Wie bereits im Zusammenhang mit der erfindungsgemäßen Vorrichtung beschrieben, kann auch bei den erfindungsgemäßen Verfahren entweder stabförmig ausgebildetes Auftragsmaterial entlang der Längsachse, um die die Hohlschulter rotiert, durch die Durchgangsöffnung in die Vertiefung zugeführt werden. Alternativ ist es auch möglich, das Auftragsmaterial als Pulver durch die Durchgangsöffnung in die Vertiefung zu führen.

Im Folgenden wird die vorliegende Erfindung anhand einer lediglich ein bevorzugtes Ausführungsbeispiel zeigenden Zeichnung erläutert, wobei
- Fig. 1: eine Querschnittsansicht, die allgemein den Aufbau eines Ausführungsbeispiels einer erfindungsgemäßen Vorrichtung zeigt,
- Fig. 2: einen Ausschnitt aus der Querschnittsansicht eines ersten Ausführungsbeispiels einer erfindungsgemäßen Vorrichtung zeigt,
- Fig. 3: einen weiteren Ausschnitt aus der Querschnittsansicht des ersten Ausführungsbeispiels einer erfindungsgemäßen Vorrichtung zeigt,
- Fig. 4: einen Ausschnitt aus der Querschnittsansicht eines zweiten Ausführungsbeispiels einer erfindungsgemäßen Vorrichtung zeigt,
- Fig. 5: einen weiteren Ausschnitt aus der Querschnittsansicht des zweiten Ausführungsbeispiels einer erfindungsgemäßen Vorrichtung zeigt
- Fig. 6: einen Ausschnitt aus der Querschnittsansicht eines dritten Ausführungsbeispiels einer erfindungsgemäßen Vorrichtung zeigt,
- Fig. 7: einen Ausschnitt aus der Querschnittsansicht eines vierten Ausführungsbeispiels einer erfindungsgemäßen Vorrichtung zeigt,
- Fig. 8: einen weiteren Ausschnitt aus der Querschnittsansicht eines vierten Ausführungsbeispiels einer erfindungsgemäßen Vorrichtung zeigt und
- Fig. 9: eine Querschnittsansicht senkrecht zu der Längsachse in der mit XI in Fig. 8 gekennzeichneten Ebene des in Fig. 8 gezeigten vierten Ausführungsbeispiels zeigt.

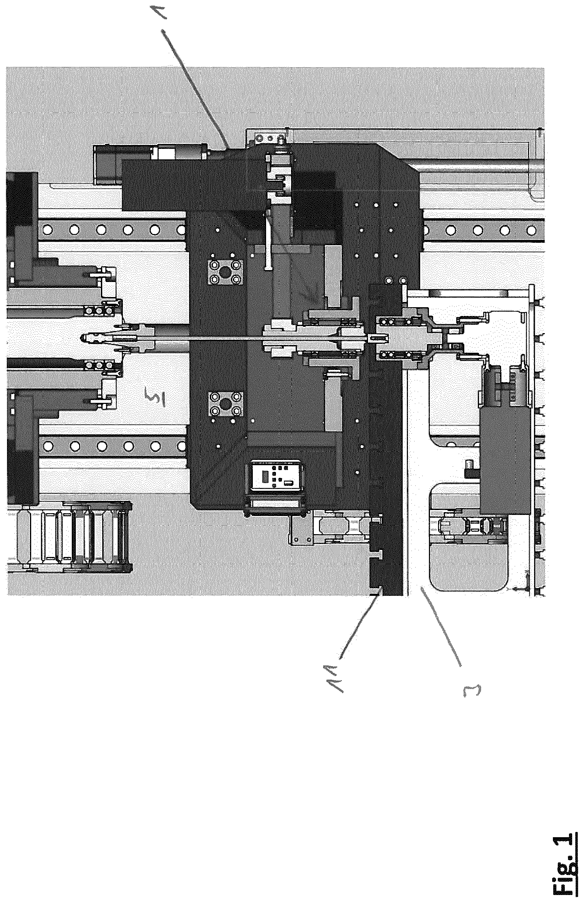

Fig. 1 zeigt allgemein den Aufbau eines Ausführungsbeispiels einer erfindungsgemäßen Vorrichtung zum Aufbringen einer Materialschicht auf einen Oberflächenbereich eines Werkstücks.

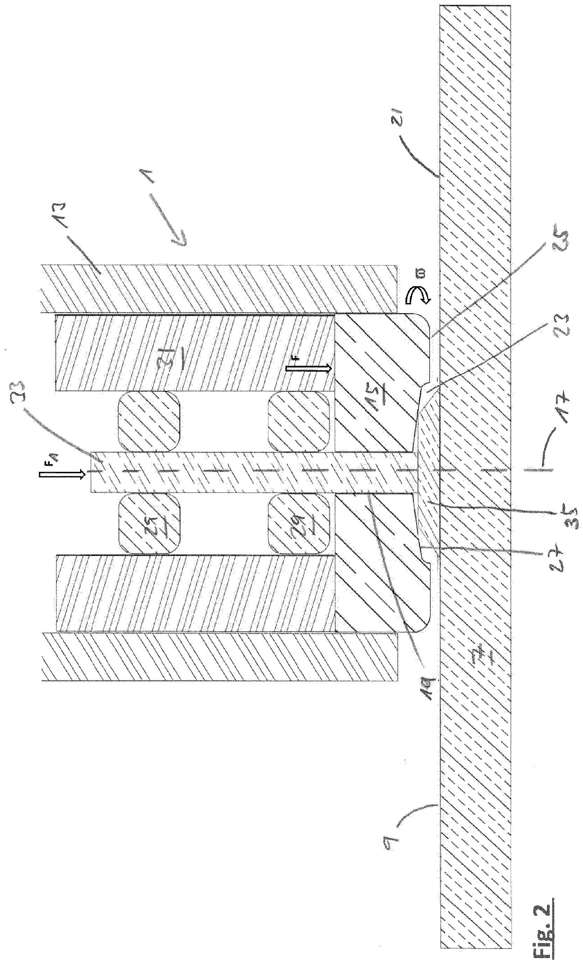

Die Vorrichtung weist eine Auftragseinrichtung 1 sowie eine Halteeinrichtung 3 auf, die beide an einem Maschinenrahmen 5 beweglich angebracht sind, so dass die Auftragseinrichtung 1 relativ zu der Haltereinrichtung 3 hier in allen drei Raumrichtungen verfahren werden kann. Die Haltereinrichtung 3 ist so ausgebildet, dass an ihr ein Werkstück 7 (siehe Fig. 2) derart befestigt werden kann, dass der zu beschichtende Oberflächenbereich 9 hin zu der Auftragseinrichtung 1 weist. Bei dem in Fig. 1 dargestellten Ausführungsbeispiel weist die Haltereinrichtung 3 eine Platte 11 auf, in der Aussparungen vorgesehen sind, in denen Klemmelemente aufgenommen werden können, mit denen das Werkstück 7 an der Platte 11 festgelegt werden kann.

In Fig. 2 ist ein erstes Ausführungsbeispiel einer erfindungsgemäßen Vorrichtung zum Aufbringen einer Materialschicht im Detail dargestellt, wobei hier nur das Werkstück 7 sowie die Auftragseinrichtung 1 dargestellt sind, während die Haltereinrichtung 3 sowie der Maschinenrahmen 5 nicht zu erkennen sind.

Das erste Ausführungsbeispiel einer erfindungsgemäßen Vorrichtung weist eine Auftragseinrichtung 1 auf, die mit einem Gehäuse 13 versehen ist, die beweglich mit dem Maschinenrahmen 5 verbunden ist, so dass die Auftragseinrichtung 1 relativ zu der Halteeinrichtung und dem daran festgelegten Werkstück 7 verfahren werden kann.

Das Gehäuse 13 stellt somit eine Basis im Sinne der vorliegenden Erfindung dar. Des Weiteren weist die Auftragseinrichtung 1 gemäß dem ersten Ausführungsbeispiel eine Hohlschulter 15 auf, die um eine Längsachse 17 drehbar in dem Gehäuse 13 und damit auch drehbar relativ zu der Basis an der Auftragseinrichtung 1 gehaltert ist. Die Hohlschulter 15 ist dabei durch einen hier nicht dargestellten Antrieb drehend angetrieben. Außerdem weist die Hohlschulter 15 eine Durchgangsbohrung 19 auf, die sich entlang der Längsachse 17, um die die Hohlschulter 15 drehend angetrieben ist, erstreckt.

Auf der zu dem Werkstück 7 und zu einer senkrecht zu der Längsachse 17 verlaufenden Werkstückebene 21 weisenden Seite weist die Hohlschulter 15 eine Vertiefung 23 auf, die von einer umlaufenden sich parallel zur Werkstückebene erstreckenden Ringfläche 25 begrenzt wird. Wenn die Auftragseinrichtung 1 an dem Oberflächenbereich 9 des Werkstücks 7 angeordnet ist, fallen der Oberflächenbereich 9 und die Werkstückebene 21, wie in Fig. 2 gezeigt, zusammen.

Wie weiter Fig. 2 zu entnehmen ist, ist zwischen der Ringfläche 25 und der Durchgangsbohrung 19 im Bereich der Vertiefung 23 eine um die Durchgangsbohrung 19 umlaufende Reibfläche 27 ausgebildet, so dass der Durchmesser der Vertiefung 23 größer als der Durchmesser der Durchgangsbohrung 19 ist.

Schließlich weist die Auftragseinrichtung 1 mindestens zwei parallel zueinander ausgerichtete Radiallager 29 auf, deren Außenring sich an einem Ringelement 31 abstützt, das fest in dem Gehäuse 13 aufgenommen ist, während die Innenringe der Radiallager 29 zu der Durchgangsbohrung 19 entlang der Längsachse 17 ausgerichtet sind. Durch die Innenringe der Radiallager 29 oder daran abgestützte Führungselemente kann ein stabförmig ausgebildeter Rohling 33 aus Auftragsmaterial hindurchgeführt werden, so dass dieser sich bis in die Vertiefung 23 erstreckt. Wenn sich plastifiziertes Material in der Vertiefung 23 befindet und der Rohling 33 aus Auftragsmaterial, wie durch den mit F₁ gekennzeichneten Pfeil dargestellt, durch die Durchgangsöffnung 19 in die Vertiefung 23 geführt wird, wird das Material des Rohlings 33 im Bereich von dessen Spitze ebenfalls plastifiziert, so dass dann, wenn kein Spalt zwischen der Ringfläche 25 und dem Oberflächenbereich 9 des Werkstücks 7 vorhanden ist, die Vertiefung 23 vollständig mit plastifiziertem Material gefüllt wird.

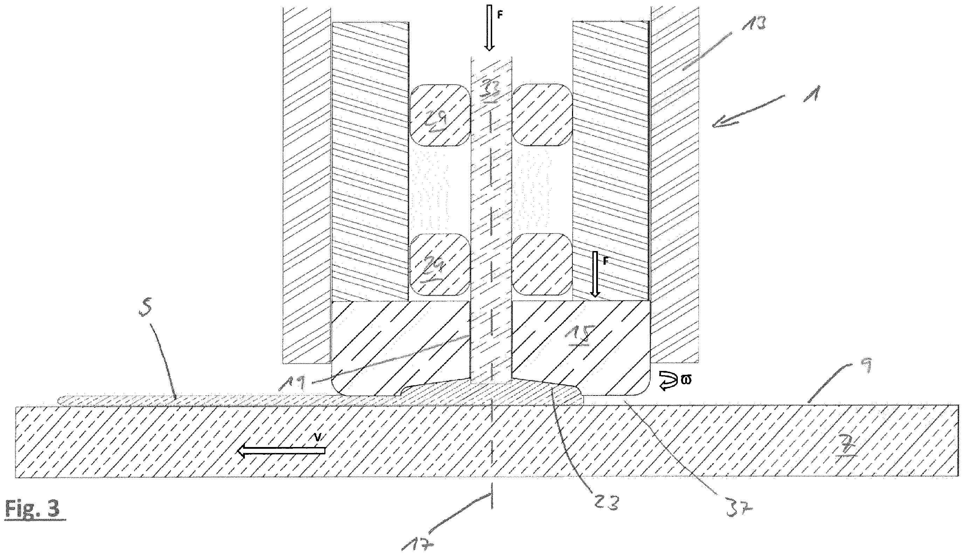

Das in den Fig. 2 und 3 dargestellte Ausführungsbeispiel einer erfindungsgemäßen Vorrichtung zum Auftragen einer Materialschicht wird wie folgt verwendet:
Zunächst wird auf dem Oberflächenbereich 9 des Werkstücks 7 ein Zusatzelement 35 befestigt, das idealerweise, jedoch nicht zwingend aus dem Auftragsmaterial gebildet ist, aus dem auch der Rohling 33 gebildet ist.

Anschließend wird die Auftragseinrichtung 1 so relativ zu der Halteeinrichtung 3 bewegt, dass die Auftragseinrichtung 1 auf das Zusatzelement 35 aufgesetzt wird, wobei dieses in der Vertiefung 23 der Hohlschulter 15 aufgenommen wird. Die Hohlschulter 15 wird dabei drehend angetrieben, so dass sie relativ zu dem fest an dem Werkstück 7 befestigten Zusatzelement 35 rotiert und an diesem reibt. Dabei wird über die Reibfläche 27 Reibungsenergie in das Zusatzelement 35 eingetragen. Aufgrund dieser Reibungsenergie wird das Zusatzelement 35 teilweise oder vollständig plastifiziert, und die Vertiefung 23 wird teilweise oder vollständig mit plastifizierten Material ausgefüllt. In diesem Zustand ist es bevorzugt, wenn die Ringfläche 25 sich zunächst möglichst nah an dem Oberflächenbereich 9 des Werkstücks 7 befindet.

Wenn die Vertiefung 23 teilweise oder vollständig mit plastifiziertem Material ausgefüllt ist, bewegt sich die Auftragseinrichtung 1 relativ zu dem Werkstück, und es wird ein Spalt 37 zwischen der Ringfläche 25 und dem Oberflächenbereich 9 des Werkstücks 7 ausgebildet.

Die Auftragseinrichtung 1 wird somit insbesondere derart über den Oberflächenbereich 9 des Werkstücks 7 bewegt wird, dass die Vertiefung 23 zu dem Oberflächenbereich 9 weist und die Werkstückebene 21 in dem Punkt, in dem die Längsachse 17 den Oberflächenbereich 9 schneidet, tangential zu dem Oberflächenbereich 9 verläuft, und dass die Ringfläche 25 beabstandet zu dem Oberflächenbereich 9 ist.

Dann, wenn der Oberflächenbereich 9 eben ist, verläuft die Werkstückebene 21 bei einer Bewegung der Auftragseinrichtung 1 bereits dann in dem Punkt tangential zu dem Oberflächenbereich 9, in dem die Längsachse 17 den Oberflächenbereich 9 schneidet, wenn die Auftragseinrichtung 1 parallel zum Oberflächenbereich 9 verschoben wird.

Bei der Bewegung der Auftragseinrichtung 1 wird der Rohling 33 gebildet aus dem Auftragsmaterial durch die Durchgangsbohrung hin zu der Vertiefung 23 geführt, so dass weiteres Auftragsmaterial in dem Bereich der Vertiefung 23 gelangt, wobei durch die Rotation der Hohlschulter 15 weiter Reibungsenergie in den Bereich der Vertiefung eingetragen wird. Dieser Zufluss von Reibungsenergie führt dazu, dass das Auftragsmaterial, das neu zugeführt wird, ebenfalls plastifiziert wird. Gleichzeitig wird durch die Bewegung des Rohlings 33 hin zu der Vertiefung 23 bereits plastifiziertes Material durch den Spalt 37 zwischen Ringfläche 25 und Oberflächenbereich 9 aus der Vertiefung 23 herausgedrückt und auf dem Oberflächenbereich 9 des Werkstücks 7 als Materialschicht S abgeschieden, wenn sich die Auftragseinrichtung 21 relativ zu dem Werkstück 7 bewegt.

Bei dieser Vorgehensweise ist es lediglich erforderlich, dass die Hohlschulter 15 drehend angetrieben ist, während das Auftragsmaterial in Form des stabförmigen Rohlings 33 nicht gegenüber dem Gehäuse 13 bzw. der Basis der Auftragseinrichtung 1 rotieren muss. Es ist also nicht erforderlich, das Auftragsmaterial selbst drehend anzutreiben. Vielmehr ist es ausreichend, dass über die Hohlschulter 15 Reibungsenergie im Bereich der Vertiefung 23 in das Auftragsmaterial eingetragen wird, um dieses zu plastifizieren.

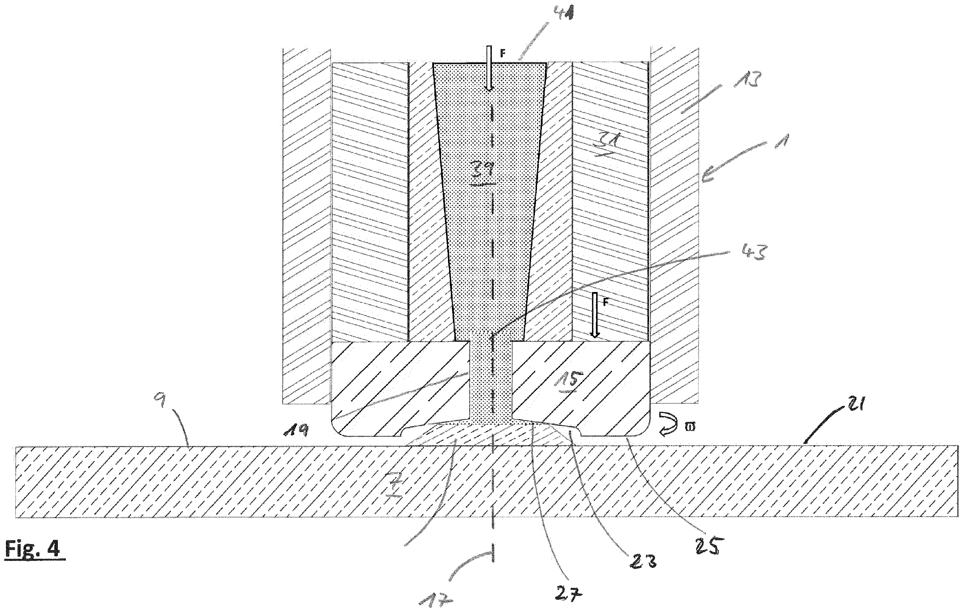

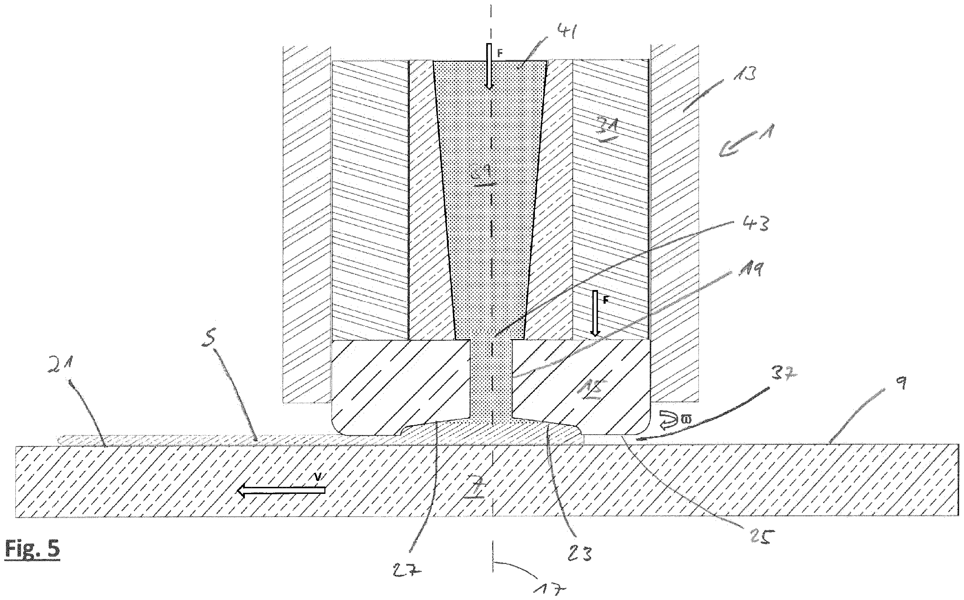

Bei dem zweiten, in Fig. 4 dargestellten Ausführungsbeispiel ist an der Auftragseinrichtung 1 ebenfalls eine drehend angetriebene Hohlschulter 15 vorgesehen, die in einem Gehäuse 13 drehbar gehaltert ist, wobei das Gehäuse 13, das auch hier eine Basis bildet, dadurch relativ zu der in Fig. 4 und 5 nicht gezeigten Halteeinrichtung 3 beweglich gehaltert ist, indem sie an einem ebenfalls in den Fig. 4 und 5 nicht dargestellten Maschinenrahmen angebracht ist.

Auch bei diesem Ausführungsbeispiel weist die Hohlschulter 15 eine Durchgangsbohrung 19 auf, die sich von einer von der Werkstückebene 21 bzw. dem Oberflächenbereich 9 des Werkstücks 7 zugewandten Seite zu einer davon abgewandten Seite der Hohlschulter 15 durch diese hindurch erstreckt, wobei die Durchgangsbohrung 19 auch hier entlang der Längsrichtung 17 verläuft, um die die Hohlschulter 15 drehend angetrieben ist.

Im Inneren des Gehäuses 13 ist ein in diesem Ausführungsbeispiel drehfest dazu angebrachter Zuführkanal 39 vorgesehen, der einen Einlass 41 sowie einen Auslass 43 aufweist. Es ist aber auch denkbar, dass der Zuführkanal 39 mit der Hohlschulter 15 mitdreht.

Der Auslass 43 des Zuführkanals 39 ist dabei so angeordnet, dass er unmittelbar an das Ende der Durchgangsbohrung 19 der drehend angetriebenen Hohlschulter 15 angrenzt, das auf der von der Werkstückebene 21 abgewandten Seite der Hohlschulter 15 angeordnet ist.

Der Zuführkanal 39 ist somit entlang der Längsachse 17 der Auftragseinrichtung 1 gemäß dem zweiten Ausführungsbeispiel zu der Durchgangsbohrung 19 ausgerichtet. Durch den Zuführkanal 39 kann von dem Einlass 41 zu dem Auslass 43 und durch die Durchgangsbohrung 19 pulverförmiges Auftragsmaterial in die Vertiefung 23 der Hohlschulter 15 eingebracht werden.

Dieses in den Fig. 4 und 5 dargestellte zweite Ausführungsbeispiel einer Vorrichtung wird wie folgt zum Aufbringen einer Materialschicht auf einem Oberflächenbereich 9 verwendet:
Zunächst wird auch in diesem Fall ein Zusatzelement 35 fest auf dem Oberflächenbereich 9 des Werkstücks 7 befestigt und die Auftragsvorrichtung 1 wird so über den Zusatzelement 35 angeordnet, dass dieses in der Vertiefung 23 angeordnet ist und im Reibkontakt mit der Reibfläche 25 der Vertiefung steht. Wenn nun die Hohlschulter 15 drehend angetrieben wird, wird wiederum Reibenergie in das Zusatzelement 35 eingebracht und dieses wird plastifiziert.

Wenn das Reibelement 35 teilweise oder vollständig plastifiziert ist und die Vertiefung 23 teilweise oder vollständig mit plastifiziertem Material ausgefüllt ist, wird die Auftragsvorrichtung 1 relativ zu dem Werkstück 7 bewegt, und es wird sichergestellt, dass zwischen der Ringfläche 25 und dem Oberflächenbereich 9 des Werkstücks 7 ein Spalt 37 vorgesehen ist, die Ringfläche 25 also beabstandet von dem Oberflächenbereich 9 ist.

Die Bewegung der Auftragseinrichtung 1 relativ zu dem Werkstück 7 erfolgt dabei wiederum derart, dass die Vertiefung 23 zu dem Oberflächenbereich 9 weist und die Werkstückebene 21 in dem Punkt, in dem die Längsachse den Oberflächenbereich schneidet, tangential zu dem Oberflächenbereich 9 verläuft.

Gleichzeitig wird pulverförmiges Auftragsmaterial durch den Zuführkanal 39 und durch die Durchgangsbohrung 19 in die Vertiefung 23 eingepresst, während die Auftragseinrichtung 1 weiter relativ zu dem Werkstück 7 bewegt wird. Durch das eingebrachte pulverförmige Auftragsmaterial wird bereits plastifiziertes Auftragsmaterial durch den Spalt 37 aus der Vertiefung 23 herausgedrückt und in dem Oberflächenbereich 9 auf dem Werkstück 7 als Materialschicht S abgeschieden.

Somit ist es auch bei diesem Ausführungsbeispiel nicht erforderlich, das auf dem Oberflächenbereich 9 aufgetragene Auftragsmaterial selbst in irgendeiner Form drehend anzutreiben, sondern es ist ausreichend, dass über die drehend angetriebene Hohlschulter 15 Reibungsenergie in dem Bereich der Vertiefung 23 eingetragen wird, so dass dort ständig plastifiziertes Material vorhanden ist, in das noch nicht bereits plastifiziertes Material über die Durchgangsbohrung 19 eingetragen wird, während gleichzeitig plastifiziertes Material durch den Spalt 37 aus der Vertiefung 23 austritt und auf dem Oberflächenbereich zur Bildung der Materialschicht S abgeschieden wird.

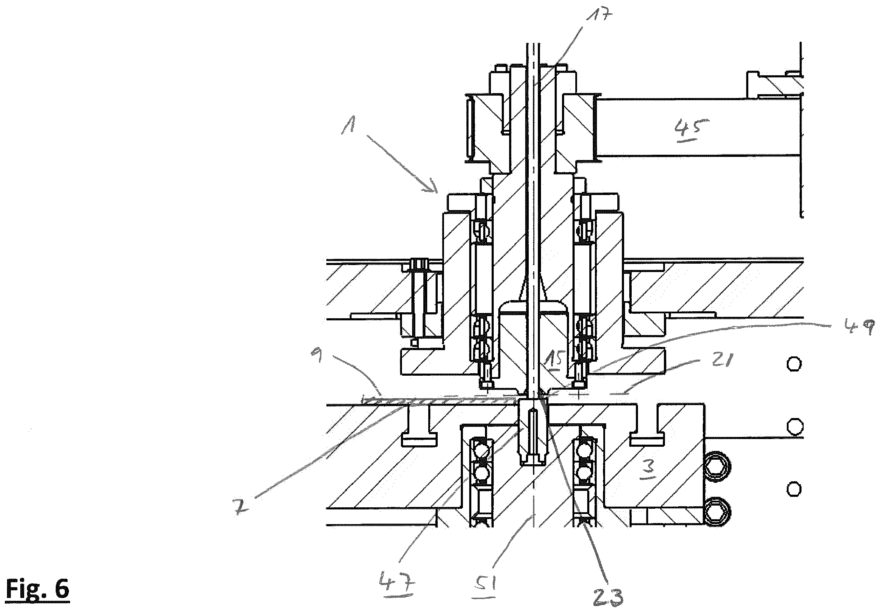

Das in Fig. 6 dargestellte dritte Ausführungsbeispiel einer erfindungsgemäßen Vorrichtung zum Aufbringen einer Materialschicht auf ein Werkstück weist eine Auftragseinrichtung 1 auf, die in der gleichen Weise ausgebildet ist, wie die Auftragseinrichtung 1, die in den Fig. 2 und 3 dargestellt ist, d.h. sie weist eine Hohlschulter 15 auf, an deren zu einem Werkstück und einer Halteeinrichtung 3 weisenden Ende eine Vertiefung 23 vorgesehen ist, wobei die Hohlschulter 15 um eine Längsachse 17 drehend angetrieben ist. Bei dem in Fig. 6 dargestellten Ausführungsbeispiel erfolgt der Antrieb der Hohlschulter 15 mit Hilfe eines Riemenantriebs 45.

Wie bereits im Zusammenhang mit dem in den Fig. 2 und 3 beschriebenen Ausführungsbeispiel dargestellt, weist die Auftragseinrichtung 1 neben der Hohlschulter 15 auch die Zuführeinrichtung für stabförmiges Auftragsmaterial umfassend zwei oder mehr Radiallager 29 auf. Außerdem kann die Auftragseinrichtung 1 so gegenüber der Halteeinrichtung 3 bewegt werden, dass die Vertiefung 23 zum dem Oberflächenbereich 9 des Werkstücks 7 weist, wobei die Werkstückebene 21 der Auftragseinrichtung 1 in dem Punkt, in dem die Längsachse 17 den Oberflächenbereich des Werkstücks schneidet, tangential zu dem Oberflächenbereich verläuft.

Im Unterschied zu dem in den Fig. 2 und 3 beschriebenen ersten Ausführungsbeispiel weist das dritte in Fig. 6 dargestellte Ausführungsbeispiel ein Reibelement 47 auf, das über einen in Fig. 6 nicht dargestellten Antrieb drehend angetrieben ist und das eine Oberfläche 49 aufweist, die so an der Halteeinrichtung 3 angeordnet ist, dass die Oberfläche 49 hin zu der Werkstückebene 21 bzw. zu der Auftragseinrichtung 1 weist. Dadurch kann die Ringfläche 25 der Hohlschulter 15 auf die Oberfläche 49 des Reibelements 47 aufgesetzt werden, wenn die Auftragseinrichtung 1 entsprechend relativ zu der Halteeinrichtung 3 verfahren wird. Insbesondere sind die Oberfläche 49 des Reibelements 47 und die Drehachse 51, um die das Reibelement 47 drehend angetrieben ist, so ausgerichtet, dass sie senkrecht zu der Werkstückebene 21 der Auftragseinrichtung 1 verläuft, wenn die Auftragseinrichtung 1 über dem Reibelement 47 angeordnet ist.

Wenn ferner ein Werkstück 7 an der Halteeinrichtung 3 befestigt ist, wie dies in Fig. 6 dargestellt ist, ist das Reibelement 47 derart angeordnet, dass die Oberfläche 49 des Reibelements 47 unmittelbar an den Oberflächenbereich 9 des Werkstücks 7 angrenzt, das an der Halteeinrichtung 3 aufgenommen ist.

Dabei sind dann der Oberflächenbereich 9 und die Oberfläche 49 des Reibelements 47 so zueinander ausgerichtet, dass die Tangentialebenen der Oberfläche 49 des Reibelements 47 und des Oberflächenbereichs 9 an der Grenze zwischen dem Oberflächenbereich 9 und der Oberfläche 49 des Reibelements 47 zusammenfallen. Wenn beide Oberflächen 9, 49 eben ausgebildet sind, bedeutet dies nichts anderes, als dass die Oberfläche 49 und der Oberflächenbereich 9 in derselben Ebene verlaufen.

Die Vorrichtung gemäß des dritten Ausführungsbeispiels kann in folgender Weise zum Aufbringen einer Materialschicht auf ein Werkstück 7 verwendet werden:
Zunächst wird die Auftragseinrichtung 1 so gegenüber dem Reibelement 47 angeordnet, dass die Drehachse 51 des Reibelements 47 senkrecht zu der Werkstückebene 21 der Auftragseinrichtung 1 verläuft. Ferner muss die Längsachse 17 der Hohlschulter 15, die in diesem Fall zusammenfällt mit der Längsachse der Auftragseinrichtung 1 die Oberfläche 49 des Reibelements 47 schneiden.

Anschließend wird die Hohlschulter 15 mittels der gesamten Auftragseinrichtung 1 so hin zu dem Reibelement 47 bewegt, dass die Ringfläche 25 (siehe Fig. 2) zur Anlage mit der Oberfläche 49 des Reibelements 47 kommt. Vorzugsweise werden die Hohlschulter 15 und das Reibelement 47 mit gleicher Drehrichtung und gleicher Drehzahl angetrieben, so dass es nicht zu einer Reibung zwischen Reibelement 47 einerseits und Hohlschulter 15 andererseits kommt. Wenn beide so zur Anlage gebracht sind, wird Auftragsmaterial durch die Durchgangsöffnung 19 in der Hohlschulter 15 in die Vertiefung 23 der Hohlschulter 15 geführt, wobei das stabförmig ausgebildete Auftragsmaterial mit dessen freiem Ende zur Anlage an die Oberfläche 49 des rotierenden Reibelements 47 kommt. Dadurch reibt das Reibelement 47 an dem Auftragsmaterial und plastifiziert dieses. Dies erfolgt solange, bis die Vertiefung 23 der Hohlschulter 15 mit plastifiziertem Material vollständig ausgefüllt ist.

Anschließend wird die Auftragseinrichtung 1 parallel zur Oberfläche 49 des Reibelements 47 und dem damit zusammenfallenden Oberflächenbereich 9 des Werkstücks 7 hin zu dem Werkstück 7 bewegt, wobei nun die Ringfläche 25 in einem Abstand zu dem Oberflächenbereich 9 gehalten wird, so dass zwischen der Ringfläche 25 der Hohlschulter 15 und dem Oberflächenbereich 9 des Werkstücks 7 ein Spalt ausgebildet ist.

Wenn nun weiter Auftragsmaterial in die Vertiefung 23 der Hohlschulter 15 zugeführt wird, wird bereits plastifiziertes Material durch den Spalt zwischen Ringfläche 25 und Oberflächenbereich 9 herausgedrückt und auf dem Oberflächenbereich 9 abgeschieden, so dass eine Materialschicht gebildet wird.

Somit wird bei diesem Ausführungsbeispiel mit Hilfe des Reibelements 47 erreicht, dass zunächst vor dem eigentlichen Auftragen der Materialschicht Auftragsmaterial innerhalb der Vertiefung 23 plastifiziert werden kann.

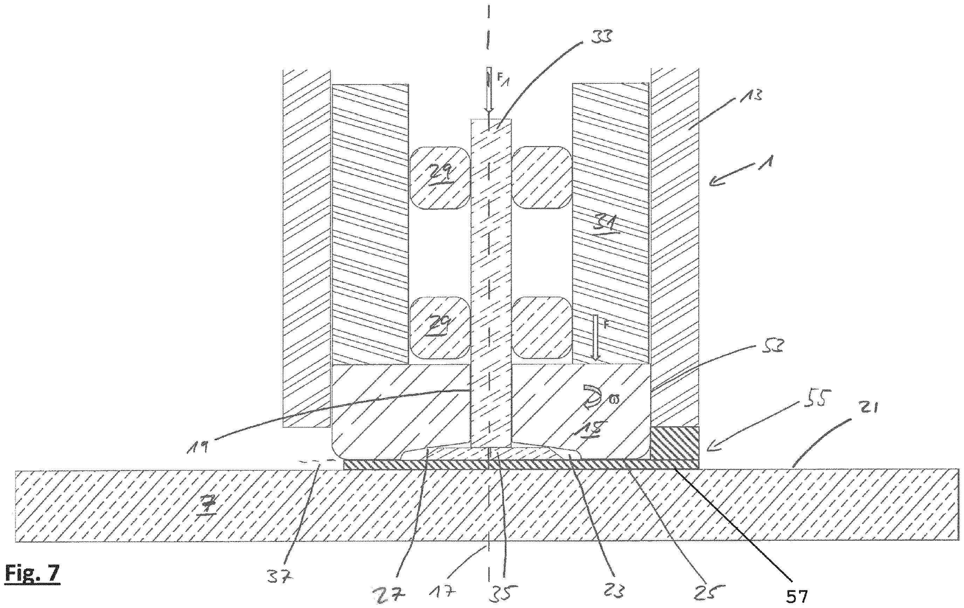

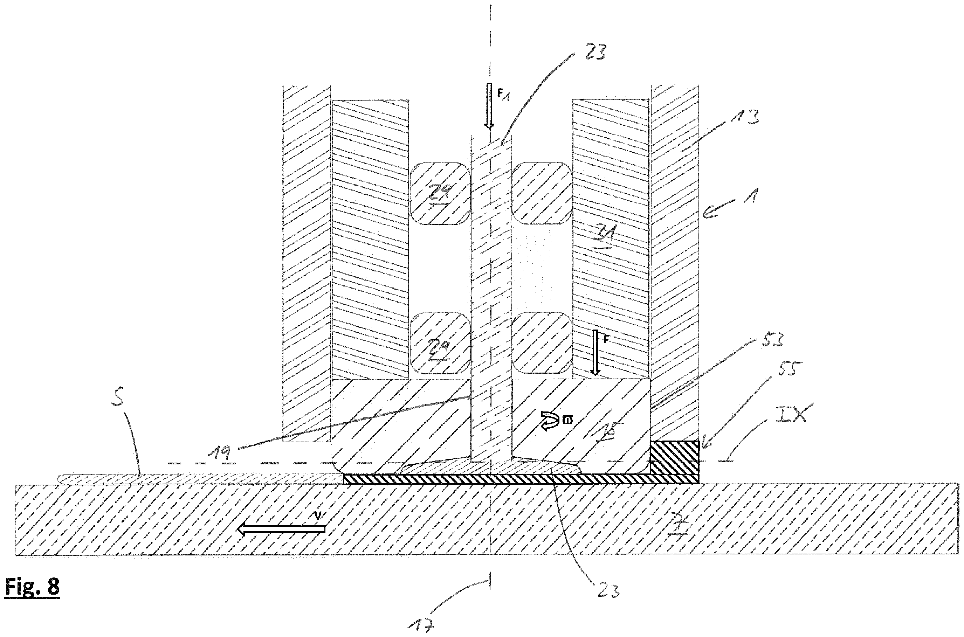

Das in den Fig. 7 bis 9 gezeigte vierte Ausführungsbeispiel ist sehr ähnlich dem ersten Ausführungsbeispiel aufgebaut, das in den Fig. 2 und 3 dargestellt und im Zusammenhang mit diesen beschrieben worden ist. Das vierte Ausführungsbeispiel einer erfindungsgemäßen Vorrichtung weist auch eine Auftragseinrichtung 1 mit einem Gehäuse 13 auf, die beweglich mit dem Maschinenrahmen 5 (in den Fig. 7 und 8 nicht dargestellt) verbunden ist. So kann die Auftragseinrichtung 1 relativ zu der Halteeinrichtung 3 und dem daran festgelegten Werkstück 7 verfahren werden. Das Gehäuse 13 stellt somit auch hier eine Basis im Sinne der vorliegenden Erfindung dar. Des Weiteren weist die Auftragseinrichtung 1 gemäß dem vierten Ausführungsbeispiel eine Hohlschulter 15 auf, die um eine Längsachse 17 drehbar in dem Gehäuse 13 und damit auch drehbar relativ zu der Basis an der Auftragseinrichtung 1 gehaltert ist. Die Hohlschulter 15 ist dabei durch einen nicht dargestellten Antrieb drehend angetrieben. Ferner weist die Hohlschulter 15 eine Durchgangsbohrung 19 auf, die sich entlang der Längsachse 17, um die die Hohlschulter 15 drehend angetrieben ist, erstreckt. Auf der zu dem Werkstück 7 und zu einer senkrecht zu der Längsachse 17 verlaufenden Werkstückebene 21 weisenden Seite weist die Hohlschulter 15 eine Vertiefung 23 auf, die von einer umlaufenden sich parallel zur Werkstückebene erstreckenden Ringfläche 25 begrenzt wird. Schließlich ist auch der äußere Umfang 53 der Hohlschulter 15 im Querschnitt kreisförmig ausgebildet.

Wenn die Auftragseinrichtung 1 an dem Oberflächenbereich 9 des Werkstücks 7 angeordnet ist, fallen der Oberflächenbereich 9 und die Werkstückebene 21, wie in Fig. 8 gezeigt, zusammen. Wie weiter Fig. 8 zu entnehmen ist, ist zwischen der Ringfläche 25 und der Durchgangsbohrung 19 im Bereich der Vertiefung 23 eine um die Durchgangsbohrung 19 umlaufende Reibfläche 27 ausgebildet, so dass der Durchmesser der Vertiefung 23 größer als der Durchmesser der Durchgangsbohrung 19 ist. Schließlich weist die Auftragseinrichtung 1 auch hier mindestens zwei parallel zu einander ausgerichtete Radiallager 29 auf, deren Außenring sich an einem Ringelement 31 abstützt, das fest in dem Gehäuse 13 aufgenommen ist, während die Innenringe der Radiallager 29 zu der Durchgangsbohrung 19 entlang der Längsachse 17 ausgerichtet sind. Durch die Innenringe der Radiallager 29 oder daran abgestützte Führungselemente kann ein stabförmig ausgebildeter Rohling 33 aus Auftragsmaterial hindurchgeführt werden, so dass dieser sich bis in die Vertiefung 23 erstreckt. Wenn sich bereits plastifiziertes Material in der Vertiefung 23 befindet und der Rohling 33 aus Auftragsmaterial, wie durch den mit F1 gekennzeichneten Pfeil dargestellt, durch die Durchgangsöffnung 19 in die Vertiefung 23 geführt wird, wird das Material des Rohlings 33 im Bereich von dessen Spitze ebenfalls plastifiziert, so dass dann, wenn kein Spalt zwischen der Ringfläche 25 und dem Oberflächenbereich 9 des Werkstücks 7 vorhanden ist, die Vertiefung 23 vollständig mit plastifiziertem Material gefüllt wird.

Im Unterschied zu dem in den Fig. 2 und 3 gezeigten ersten Ausführungsbeispiel weist das vierte Ausführungsbeispiel ein Kragenelement 55 auf, das in dem hier gezeigten vierten Ausführungsbeispiel an dem Gehäuse 13 so angebracht ist, dass es um die Längsachse 17 schwenken kann. Das Kragenelement 55 umgibt die Hohlschulter 15 in einer Weise, die im Folgenden noch beschrieben werden wird. Das Kragenelement 55 weist zudem eine Auflagefläche 57 auf, die in der Werkstückebene 21 verläuft und damit in axialer Richtung der Längsachse 17 von der Ringfläche 25 der Hohlschulter 15 beabstandet ist.

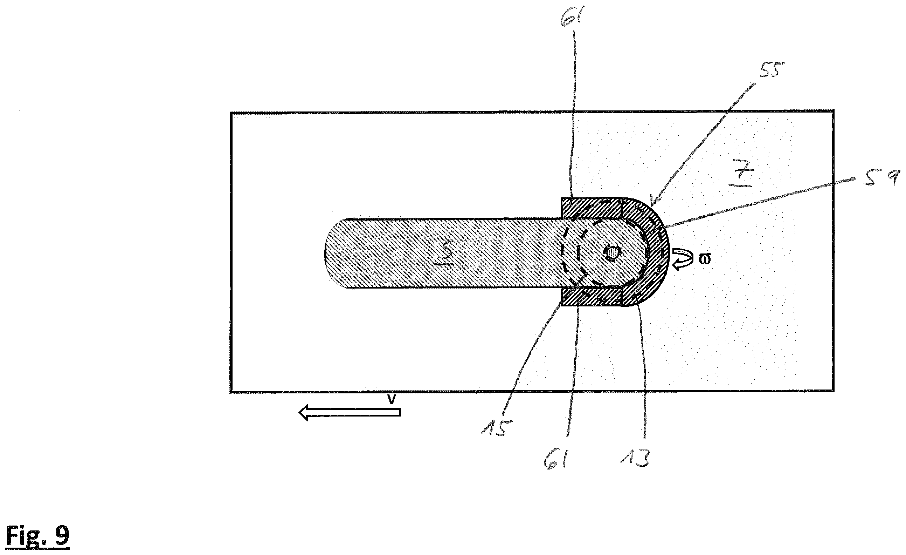

Wie Fig. 9 zeigt umfasst das Kragenelement 55 zunächst einen Abschnitt 59, der in dem hier gezeigten Ausführungsbeispiel einen kreisringförmigen Verlauf hat und der sich um die Hohlschulter 15 in diesem hier gezeigten Ausführungsbeispiel über einen Winkel von 180° herum erstreckt. Weiterhin umfasst das Kragenelement 55 zusätzlich zwei Arme 61 auf, die parallel zueinander verlaufen und sich von den Enden des Abschnitts 59 des Kragenelements 55, der um die Hohlschulter 15 herum verläuft, weg erstrecken.

Während der Bewegung der Auftragseinrichtung 1 relativ zu dem Oberflächenbereich 9 des Werkstücks 7, wenn die Ringfläche 25 der Hohlschulter 15 durch den Spalt 37 von dem Oberflächenbereich 9 beabstandet ist, liegt das Kragenelement 55 mit seiner Auflagefläche 57 auf dem Oberflächenbereich auf. Ferner ist das Kragenelement 55 aufgrund seiner Schwenkbarkeit um die Längsachse 17 so ausgerichtet, dass der Abschnitt 59 des Kragenelements 55 der die Hohlschulter 15 umgibt, in die Richtung weist, in die sich die Auftragseinrichtung 1 über den Oberflächenbereich 9 bewegt. Die Arme 61 weisen entgegen der Bewegungsrichtung nach hinten und begrenzen einen Streifen, dessen Breite dem Durchmesser der Hohlschulter 15 entspricht.

Wenn die Hohlschulter 15 rotierend angetrieben wird, sodass Auftragsmaterial in der Vertiefung 23 plastifiziert wird, wird durch das Kragenelement 55 erreicht, dass plastifiziertes Material nur in den Bereichen unter der Ringfläche 25 hindurch aus der Vertiefung 23 austritt, die entgegen der Bewegungsrichtung ausgerichtet sind. Da sich der Abschnitt 59 des Kragenelements 55 über 180° erstreckt und die Arme 61 sich parallel zueinander daran anschließen, wird eine Materialschicht S aufgetragen, deren Breite im Wesentlichen dem Durchmesser der Hohlschulter 15 entspricht.

Da das Kragenelement 55 ferner um die Längsachse 17 der Auftragseinrichtung 1 schwenkbar an dem Gehäuse 13 angebracht ist, kann es sich immer so ausrichten, dass der die Hohlschulter 15 umgebende Abschnitt 59 des Kragenelements 55 in die Richtung weist, in der sich die Hohlschulter 15 relativ zum Oberflächenbereich 9 des Werkstücks 7 bewegt. Es folgt also der Bewegungsrichtung.

Das zuvor beschriebene Kragenelement 55 ist im Zusammenhang mit dem vierten Ausführungsbeispiel beschrieben worden, das dem ersten Ausführungsbeispiel stark ähnelt. Es ist aber genauso möglich, das zuvor beschriebene Kragenelement 55, das lediglich in der hier beschriebenen Ausführungsform schwenkbar an der Basis angebracht ist und die sich nach hinten erstreckenden Arme 61 aufweist, an dem zweiten oder dritten Ausführungsbeispiel anzubringen.

## Patentansprüche

1. Vorrichtung zum Aufbringen einer Materialschicht auf einen Oberflächenbereich (9) eines Werkstücks (7)
mit einer Halteeinrichtung (3) zur Aufnahme des Werkstücks (7),
mit einer Auftragseinrichtung (1),
wobei die Auftragseinrichtung (1) und die Halteeinrichtung (3) relativ zueinander bewegt werden können,
wobei die Halteeinrichtung (3) derart ausgestaltet ist, dass das Werkstück (7) derart an der Halteeinrichtung (3) gehaltert ist, dass der Oberflächenbereich (9) des Werkstücks (7) zu der Auftragseinrichtung (1) weist,
wobei die Auftragseinrichtung (1) eine Basis (13) aufweist,
wobei die Auftragseinrichtung (1) eine um eine Längsachse (17) relativ zur Basis (13) drehend angetriebene Hohlschulter (15) aufweist,
wobei die Hohlschulter (15) eine zu einer senkrecht zu der Längsachse (17) verlaufenden Werkstückebene (21) weisende Vertiefung (23) aufweist, die von einer um die Längsachse (17) umlaufenden Ringfläche (25) begrenzt ist,
wobei die Hohlschulter (15) mit einer entlang der Längsachse (17) verlaufenden Durchgangsöffnung (19) versehen ist, deren Durchmesser kleiner als der der Vertiefung (23) ist,
wobei die Auftragseinrichtung (1) eine Zuführeinrichtung für Auftragsmaterial aufweist, die auf der von der Werkstückebene (21) wegweisenden Seite der Hohlschulter (15) so angeordnet ist, dass Auftragsmaterial von der Zuführeinrichtung durch die Durchgangsöffnung (19) in die Vertiefung (23) eingebracht werden kann, und
wobei die Auftragseinrichtung (1) und die Halteeinrichtung (3) derart relativ zueinander bewegt werden können, dass während der Relativbewegung die Werkstückebene (21) in dem Punkt tangential zu dem Oberflächenbereich (9) eines an der Halteeinrichtung (3) gehalterten Werkstücks (7) verläuft, in dem die Längsachse (17) den Oberflächenbereich (9) des Werkstücks (7) schneidet,
**dadurch gekennzeichnet,**
**dass** die Hohlschulter (15) eine Reibfläche (27) aufweist, die zwischen der Ringfläche (25) und der Durchgangsöffnung (19) angeordnet ist, wobei die Reibfläche (27) die Durchgangsöffnung (19) umgibt, so dass einem in die Vertiefung (23) eingebrachten Auftragsmaterial durch eine Rotation der Hohlschulter (15), aufgrund der Reibung zwischen Hohlschulter (15) und Auftragsmaterial, kontinuierlich Reibungsenergie zugeführt wird, sodass durch diese Energiezufuhr das Auftragsmaterial in der Vertiefung (23) plastifiziert wird.

2. Vorrichtung nach Anspruch 1, wobei die Vorrichtung einen Maschinenrahmen (5) aufweist, wobei die Halteeinrichtung (3) und die Auftragseinrichtung (1) an dem Maschinenrahmen (5) gehaltert sind und
wobei die Halteeinrichtung (3) und/oder die Auftragseinrichtung (1) gegenüber dem Maschinenrahmen (5) bewegbar sind, sodass die Auftragseinrichtung (1) und die Halteeinrichtung (3) relativ zueinander bewegt werden können.

3. Vorrichtung nach Anspruch 1 oder 2, wobei die Ringfläche (25) parallel zur Werkstückebene (21) verläuft.

4. Vorrichtung nach Anspruch 3, wobei die Auftragseinrichtung (1) und die Halteeinrichtung (3) derart ausgestaltet sind, dass die Ringfläche (25) von der Werkstückebene (21) beabstandet ist, wenn die Auftragseinrichtung (1) und die Halteeinrichtung (3) relativ zueinander bewegt werden.

5. Vorrichtung nach einem der Ansprüche 1 bis 4, wobei die Zuführeinrichtung ein oder mehrere Führungselemente aufweist, die einen Förderweg für stabförmig ausgebildetes Auftragsmaterial bilden, wobei sich der Förderweg entlang der Längsachse (17) erstreckt.

6. Vorrichtung nach Anspruch 5, wobei die ein oder mehreren Führungselemente (29) zumindest ein Radiallager (29) umfassen, das einen Innenring aufweist, der zu der Durchgangsöffnung (19) ausgerichtet ist.

7. Vorrichtung nach einem der Ansprüche 1 bis 4, wobei die Zuführeinrichtung einen Zuführkanal (39) aufweist, der vorzugsweise drehfest an der Basis gehaltert ist und der einen Einlass (41) und einen Auslass (43) aufweist,
wobei der Auslass (43) zu der Durchgangsöffnung (19) ausgerichtet und vorzugsweise unmittelbar auf der von der Werkstückebene (21) wegweisenden Seite der Hohlschulter (15) an diese angrenzt.

8. Vorrichtung nach einem der Ansprüche 1 bis 2. 7, wobei ein Kragenelement (55) vorgesehen ist,
wobei das Kragenelement (55) eine Auflagefläche (57) aufweist, die in der Werkstückebene (21) verläuft,
wobei der äußere Umfang (53) der Hohlschulter (15), zumindest benachbart zu der Ringfläche (25), einen kreisförmigen Querschnitt hat und
wobei sich ein Abschnitt (59) des Kragenelements (55) um den äußeren Umfang (53) der Hohlschulter (15), vorzugsweise über einen Winkel von 180°, herum erstreckt.

9. Vorrichtung nach einem der Ansprüche 1 bis 2. 8, wobei die Halteeinrichtung (3) ein Reibelement (47) aufweist, das um eine Drehachse (51) drehend angetrieben ist,
wobei die Auftragseinrichtung (1) derart relativ zu dem Reibelement (47) ausgerichtet werden kann, dass die Drehachse (51) so angeordnet ist, dass sie senkrecht zu der Werkstückebene (21) verläuft, wenn die Längsachse (17) das Reibelemente schneidet und die Werkstückebene mit der Oberfläche des Reibelements zusammenfällt, und
wobei das Reibelement (47) derart an der Halteeinrichtung (3) angeordnet ist, dass die Oberfläche (49) des Reibelements (47) so unmittelbar an den Oberflächenbereich (9) eines an der Halteeinrichtung (3) aufgenommenen Werkstücks (7) angrenzt, dass die Tangentialebenen der Oberfläche (49) des Reibelements (47) und des Oberflächenbereichs (9) an der Grenze zwischen Oberflächenbereich (9) und Oberfläche (49) des Reibelements (47) zusammenfallen.

10. Verfahren zum Aufbringen einer Materialschicht (S) auf einen Oberflächenbereich (9) eines Werkstücks (7),
wobei eine Auftragseinrichtung (1) verwendet wird, die eine um eine Längsachse (17) relativ zur Basis drehbare Hohlschulter (15) aufweist, wobei die Hohlschulter (15) eine zu einer senkrecht zu der Längsachse (17) verlaufenden Werkstückebene (21) weisende Vertiefung (23) aufweist, die von einer um die Längsachse (17) umlaufenden Ringfläche (25) begrenzt ist, und wobei die Hohlschulter (23) mit einer entlang der Längsachse (17) verlaufenden Durchgangsöffnung (19) versehen ist, deren Durchmesser kleiner als der der Vertiefung (23) ist,
wobei die Hohlschulter (15) drehend angetrieben wird,
wobei Auftragsmaterial durch die Durchgangsöffnung (19) in die Vertiefung (23) geführt wird,
wobei das zugeführte Auftragsmaterial in der Vertiefung (23) plastifiziert wird und,
wobei die Auftragseinrichtung (1) derart über den Oberflächenbereich (9) des Werkstücks (7) bewegt wird, dass die Vertiefung (23) zu dem Oberflächenbereich (9) weist und die Werkstückebene (21) in dem Punkt, in dem die Längsachse (17) den Oberflächenbereich (9) schneidet, tangential zu dem Oberflächenbereich (9) verläuft und dass die Ringfläche (25) beabstandet zu dem Oberflächenbereich (9) ist, sodass plastifiziertes Auftragsmaterial auf dem Oberflächenbereich (9) abgeschieden wird,
**dadurch gekennzeichnet,**
**dass** die Hohlschulter (15) eine Reibfläche (27) aufweist, die zwischen der Ringfläche (25) und der Durchgangsöffnung (19) angeordnet ist, wobei die Reibfläche (27) die Durchgangsöffnung (19) umgibt, so dass dem in die Vertiefung (23) eingebrachten Auftragsmaterial durch die Rotation der Hohlschulter (15), aufgrund der Reibung zwischen Hohlschulter (15) und Auftragsmaterial, kontinuierlich Reibungsenergie zugeführt wird, sodass durch diese Energiezufuhr das Auftragsmaterial in der Vertiefung (23) plastifiziert wird.

11. Verfahren nach Anspruch 10, wobei auf dem Oberflächenbereich (9) des Werkstücks (7) ein Zusatzelement (35) vorzugsweise aus dem Auftragsmaterial befestigt ist,
wobei die Auftragseinrichtung (1), bevor die Auftragseinrichtung (1) über den Oberflächenbereich (9) des Werkstücks (7) bewegt wird, so auf den Oberflächenbereich (9) aufgesetzt wird, dass das Zusatzelement (35) in der Vertiefung (23) so aufgenommen wird, dass es an der Hohlschulter (15) anliegt,
wobei die Hohlschulter (15) drehend angetrieben wird, sodass die Hohlschulter (15) an dem Zusatzelement (35) reibt und das Zusatzelement (35) plastifiziert wird, und
wobei dann, wenn das Zusatzelement (35) plastifiziert ist, Auftragsmaterial durch die Durchgangsöffnung (19) in die Vertiefung (23) geführt wird und die Auftragseinrichtung (1) über den Oberflächenbereich (9) des Werkstücks (7) bewegt wird.

12. Verfahren nach Anspruch 10, wobei ein Reibelement (47) vorgesehen ist, das um eine Drehachse (51) drehend angetrieben wird,
wobei die Auftragseinrichtung (1) derart relativ zu dem Reibelement (47) ausgerichtet werden kann, dass die Drehachse (51) derart angeordnet ist, dass sie senkrecht zu der Werkstückebene (21) verläuft, wenn die Längsachse (17) das Reibelement (47) schneidet und die Werkstückebene (21) mit der Oberfläche (49) des Reibelements (47) zusammenfällt, und
wobei die Oberfläche (49) des Reibelements (47) so unmittelbar an den Oberflächenbereich (9) des Werkstücks (7) angrenzt, dass die Tangentialebenen der Oberfläche (49) des Reibelements (47) und des Oberflächenbereichs (9) an der Grenze zwischen Oberflächenbereich (9) und Oberfläche (49) des Reibelements (47) zusammenfallen,
wobei die Auftragseinrichtung (1), bevor die Auftragseinrichtung (1) über den Oberflächenbereich (9) des Werkstücks (7) bewegt wird, auf das Reibelement (47) aufgesetzt wird, sodass in die Vertiefung (23) geführtes Auftragsmaterial in Reibkontakt mit dem Reibelement (47) gelangt und das Auftragsmaterial plastifiziert wird, und
wobei dann, wenn die Vertiefung (23) mit plastifiziertem Auftragsmaterial gefüllt ist, die Auftragseinrichtung (1) über den Oberflächenbereich (9) des Werkstücks (7) bewegt wird und Auftragsmaterial durch die Durchgangsöffnung (19) in die Vertiefung (23) geführt wird.

13. Verfahren nach einem der Ansprüche 11 bis 12, wobei das Auftragsmaterial stabförmig entlang der Längsachse (17) durch die Durchgangsöffnung (19) in die Vertiefung (23) zugeführt wird.

14. Verfahren nach einem der Ansprüche 11 bis 12, wobei das Auftragsmaterial als Pulver durch die Durchgangsöffnung (19) in die Vertiefung (23) geführt wird.

## Claims

1. Device for applying a material layer to a surface region (9) of a workpiece (7),
having a holding installation (3) for receiving the workpiece (9);
having an application installation (1);
wherein the application installation (1) and the holding installation (3) can be moved relative to one another;
wherein the holding installation (3) is designed in such a manner that the workpiece (7) is mounted on the holding installation (3) in such a manner that the surface region (9) of the workpiece (7) points towards the application installation (1);
wherein the application installation (1) has a base (13) ;
wherein the application installation (1) has a hollow shoulder (5) which is driven in a rotating manner about a longitudinal axis (17) relative to the base (13);
wherein the hollow shoulder (15) has a depression (23) which points towards a workpiece plane (21) running perpendicularly to the longitudinal axis (17) and which is delimited by an annular face (25) encircling the longitudinal axis (17);
wherein the hollow shoulder (15) is provided with a passage opening (19) which runs along the longitudinal axis (17) and of which the diameter is smaller than that of the depression (23);
wherein the application installation (1) has a supply installation for application material, which on that side of the hollow shoulder (15) that points away from the workpiece plane (21) is disposed such that application material can be introduced from the supply installation, through the passage opening (19), into the depression (23); and
wherein the application installation (1) and the holding installation (3) can be moved relative to one another in such a manner that during the relative movement the workpiece plane (21) runs tangentially to the surface region (9) of a workpiece (7) mounted on the holding installation (3) in that point in which the longitudinal axis (17) intersects the surface region (9) of the workpiece (7),
**characterized in that**
the hollow shoulder (15) has a friction face (27) which is disposed between the annular face (25) and the passage opening (19), wherein the friction face (27) surrounds the passage opening (19) such that an application material introduced into the depression (23) is continuously supplied with frictional energy by a rotation of the hollow shoulder (15), by virtue of the friction between the hollow shoulder (15) and the application material, so that the application material in the depression (23) is plasticized as a result of this input of energy.

2. Device according to Claim 1, wherein the device has a machine frame (5), wherein the holding installation (3) and the application installation (1) are mounted on the machine frame (5); and Wherein the holding installation (3) and/or the application installation (1) are/is movable relative to the machine frame (5) so that the application installation (1) and the holding installation (3) can be moved relative to one another.

3. Device according to Claim 1 or 2, wherein the annular face (25) runs parallel to the workpiece plane (21).

4. Device according to Claim 3, wherein the application installation (1) and the holding installation (3) are designed in such a manner that the annular face (25) is spaced apart from the workpiece plane (21) when the application installation (1) and the holding installation (3) are moved relative to one another.

5. Device according to one of Claims 1 to 4, wherein the supply installation has one or a plurality of guiding elements which form a conveying path for application material of a rod-shaped configuration, wherein the conveying path extends along the longitudinal axis (17).

6. Device according to Claim 5, wherein the one guiding element (29) or the plurality of guiding elements (29) comprise(s) at least one radial bearing (29) which has an inner race that is aligned towards the passage opening (19).

7. Device according to one of Claims 1 to 4, wherein the supply installation has a supply duct (39) which is preferably mounted so as to be stationary on the base and which has an inlet (41) and an outlet (43), wherein the outlet (43) is aligned towards the passage opening (19) and is directly contiguous to the latter preferably on that side of the hollow shoulder (15) that points away from the workpiece plane (21).

8. Device according to one of Claims 1 to 7, wherein a collar element (55) is provided;
wherein the collar element (55) has a bearing face (57) which runs in the workpiece plane (21);
wherein the outer circumference (53) of the hollow shoulder (15), at least adjacent to the annular face (25), has a circular cross section; and
wherein a portion (59) of the collar element (55) extends about the outer circumference (53) of the hollow shoulder (15), preferably across an angle of 180°.

9. Device according to one of Claims 1 to 8, wherein the holding installation (3) has a friction element (47) which is driven in a rotating manner about a rotation axis (51);
wherein the application installation (1) can be aligned relative to the friction element (47) in such a manner that the rotation axis (51) is disposed such that the latter runs perpendicularly to the workpiece plane (21) when the longitudinal axis (17) intersects the friction element and the workpiece plane coincides with the surface of the friction element; and
wherein the friction element (47) is disposed on the holding installation (3) in such a manner that the surface (49) of the friction element (47) is directly contiguous to the surface region (9) of a workpiece (7) received on the holding installation (3) such that the tangential planes of the surface (49) of the friction element (47) and of the surface region (9) coincide at the boundary between the surface region (9) and the surface (49) of the friction element (47).

10. Method for applying a material layer (8) to a surface region (9) of a workpiece (7);
wherein used is an application installation (1) which has a hollow shoulder (15) that is rotatable about a longitudinal axis (17) relative to the base;
wherein the hollow shoulder (15) has a depression (23) which points towards a workpiece plane (21) running perpendicularly to the longitudinal axis (17) and which is delimited by an annular face (25) encircling the longitudinal axis (17); and wherein the hollow shoulder (23) is provided with a passage opening (19) which runs along the longitudinal axis (17) and of which the diameter is smaller than that of the depression (23);
wherein the hollow shoulder (15) is driven in a rotating manner;
wherein application material is guided through the passage opening (19) into the depression (23);
wherein the supplied application material in the depression (23) is plasticized; and
wherein the application installation (1) is moved across the surface region (9) of the workpiece (7) in such a manner that the depression (23) points towards the surface region (9) and the workpiece plane (9) runs tangentially to the surface region (9) in that point in which the longitudinal axis (17) intersects the surface region (9), and that the annular face (25) is spaced apart from the surface region (9) so that plasticized application material is deposited onto the surface region (9),
**characterized in that**
the hollow shoulder (15) has a friction face (27) which is disposed between the annular face (25) and the passage opening (19), wherein the friction face (27) surrounds the passage opening (19) such that the application material introduced into the depression (23) is continuously supplied with frictional energy by a rotation of the hollow shoulder (15), by virtue of the friction between the hollow shoulder (15) and the application material, so that the application material in the depression (23) is plasticized as a result of this input of energy.

11. Method according to Claim 10, wherein fastened to the surface region (9) of the workpiece (7) is an additional element (35), preferably made of the application material;
wherein the application installation (1), before the application installation (1) is moved across the surface region (9) of the workpiece (7), is placed onto the surface region (9) such that the additional element (35) is received in the depression (23) such that said additional element (35) bears on the hollow shoulder (15);
wherein the hollow shoulder (15) is driven in a rotating manner so that the hollow shoulder (15) rubs on the additional element (35) and the additional element (35) is plasticized; and
wherein, when the additional element (35) is plasticized, application material is guided through the passage opening (19) into the depression (23), and the application installation (1) is moved across the surface region (9) of the workpiece (7).

12. Method according to Claim 10, wherein provided is a friction element (47) which is driven in a rotating manner about a rotation axis (51);
wherein the application installation (1) can be aligned relative to the friction element (47) in such a manner that the rotation axis (51) is disposed in such a manner that the latter runs perpendicularly to the workpiece plane (21) when the longitudinal axis (17) intersects the friction element (47) and the workpiece plane (21) coincides with the surface (49) of the friction element (47); and
wherein the surface (49) of the friction element (47) is directly contiguous to the surface region (9) of the workpiece (7) such that the tangential planes of the surface (49) of the friction element (47) and of the surface region (9) coincide at the boundary between the surface region (9) and the surface (49) of the friction element (47);
wherein the application installation (1), before the application installation (1) is moved across the surface region (9) of the workpiece (7), is placed onto the friction element (47) such that application material guided into the depression (23) comes into frictional contact with the friction element (47) and the application material is plasticized; and
wherein, when the depression (23) is filled with the plasticized application material, the application installation (1) is moved across the surface region (9) of the workpiece (7), and application material is guided through the passage opening (19) into the depression (23).

13. Method according to one of Claims 11 to 12, wherein the application material in the form of rods is supplied along the longitudinal axis (17), through the passage opening (19), into the depression (23).

14. Method according to one of Claims 11 to 12, wherein the application material is guided as a powder through the passage opening (19) into the depression (23) .

## Revendications

1. Dispositif pour appliquer une couche de matériau sur une zone de surface (9) d'une pièce (7)
avec un dispositif de maintien (3) pour recevoir la pièce (7),
avec un dispositif d'application (1),
le dispositif d'application (1) et le dispositif de maintien (3) étant aptes à être déplacés l'un par rapport à l'autre,
le dispositif de maintien (3) étant conçu de telle sorte que la pièce (7) est maintenue sur le dispositif de maintien (3) de telle sorte que la zone de surface (9) de la pièce (7) est orientée vers le dispositif d'application (1),
le dispositif d'application (1) présentant une base (13), le dispositif d'application (1) présentant un épaulement creux (15) entraîné en rotation autour d'un axe longitudinal (17) par rapport à la base (13),
l'épaulement creux (15) présentant un renfoncement (23) orienté vers un plan de pièce (21) s'étendant perpendiculairement à l'axe longitudinal (17), lequel renfoncement est délimité par une surface annulaire (25) s'étendant autour de l'axe longitudinal (17),
l'épaulement creux (15) étant pourvu d'une ouverture traversante (19) s'étendant le long de l'axe longitudinal (17), dont le diamètre est inférieur à celui du renfoncement (23),
le dispositif d'application (1) présentant un dispositif d'alimentation en matériau d'application, qui est disposé sur le côté de l'épaulement creux (15) opposé au plan de la pièce (21) de telle sorte que le matériau d'application est apte à être introduit par le dispositif d'alimentation dans le renfoncement (23) à travers l'ouverture traversante (19), et
le dispositif d'application (1) et le dispositif de maintien (3) étant aptes à être déplacés l'un par rapport à l'autre de telle sorte que, pendant le mouvement relatif, le plan de la pièce (21) s'étend tangentiellement à la zone de surface (9) d'une pièce (7) maintenue sur le dispositif de maintien (3), au point où l'axe longitudinal (17) coupe la zone de surface (9) de la pièce (7),
**caractérisé en ce que**
l'épaulement creux (15) présente une surface de friction (27) qui est disposée entre la surface annulaire (25) et l'ouverture traversante (19), la surface de friction (27) entourant l'ouverture traversante (19), de sorte qu'un matériau d'application introduit dans le renfoncement (23) est alimenté en continu en énergie de frottement par une rotation de l'épaulement creux (15), en raison du frottement entre l'épaulement creux (15) et le matériau d'application, de sorte que, par cet apport d'énergie, le matériau d'application est plastifié dans le renfoncement (23).

2. Dispositif selon la revendication 1,
le dispositif présentant un châssis de machine (5),
le dispositif de maintien (3) et le dispositif d'application (1) étant maintenus sur le châssis de machine (5) et
le dispositif de maintien (3) et/ou le dispositif d'application (1) étant mobiles par rapport au châssis de machine (5), de sorte que le dispositif d'application (1) et le dispositif de maintien (3) sont aptes à être déplacés l'un par rapport à l'autre.

3. Dispositif selon la revendication 1 ou la revendication 2, dans lequel la surface annulaire (25) est parallèle au plan de la pièce (21).

4. Dispositif selon la revendication 3, dans lequel le dispositif d'application (1) et le dispositif de maintien (3) sont configurés de telle sorte que la surface annulaire (25) est espacée du plan de la pièce (21) lorsque le dispositif d'application (1) et le dispositif de maintien (3) sont déplacés l'un par rapport à l'autre.

5. Dispositif selon l'une quelconque des revendications 1 à 4, dans lequel le dispositif d'alimentation comprend un ou plusieurs éléments de guidage qui forment un chemin de transport pour le matériau d'application en forme de bâtonnet,
le chemin de transport s'étendant le long de l'axe longitudinal (17).

6. Dispositif selon la revendication 5,
dans lequel les un ou plusieurs éléments de guidage (29) comprennent au moins un palier radial (29) qui présente une bague intérieure qui est alignée avec l'ouverture traversante (19).

7. Dispositif selon l'une quelconque des revendications 1 à 4, dans lequel le dispositif d'alimentation comprend un canal d'alimentation (39), qui est de préférence supporté en rotation sur la base et qui comprend une entrée (41) et une sortie (43),
la sortie (43) étant orientée vers l'ouverture traversante (19) et étant de préférence directement adjacente à l'épaulement creux (15) sur le côté de celui-ci qui est à l'opposé du plan de la pièce (21).

8. Dispositif selon l'une des revendications 1 à 7, dans lequel il est prévu un élément (55) formant collerette,
l'élément (55) formant collerette présentant une surface d'appui (57) qui s'étend dans le plan de la pièce (21),
la périphérie extérieure (53) de l'épaulement creux (15), au moins au voisinage de la surface annulaire (25), ayant une section transversale circulaire et
une partie (59) de l'élément (55) formant collerette s'étendant autour de la périphérie extérieure (53) de l'épaulement creux (15), de préférence sur un angle de 180°.

9. Dispositif selon l'une quelconque des revendications 1 à 8,
dans lequel le dispositif de maintien (3) comporte un élément de friction (47) qui est entraîné en rotation autour d'un axe de rotation (51),
dans lequel le dispositif d'application (1) est apte à être orienté par rapport à l'élément de friction (47) de telle sorte que l'axe de rotation (51) est disposé de manière à être perpendiculaire au plan de la pièce (21) lorsque l'axe longitudinal (17) coupe l'élément de friction et que le plan de la pièce coïncide avec la surface de l'élément de friction, et
l'élément de friction (47) étant disposé sur le dispositif de maintien (3) de telle sorte que la surface (49) de l'élément de friction (47) soit directement adjacente à la zone de surface (9) d'une pièce (7) reçue sur le dispositif de maintien (3) de telle sorte que les plans tangentiels de la surface (49) de l'élément de friction (47) et de la zone de surface (9) coïncident à la limite entre la zone de surface (9) et la surface (49) de l'élément de friction (47).

10. Procédé d'application d'une couche de matériau (S) sur une zone de surface (9) d'une pièce (7),
dans lequel on utilise un dispositif d'application (1) qui présente un épaulement creux (15) apte à tourner autour d'un axe longitudinal (17) par rapport à la base, l'épaulement creux (15) présentant un renfoncement (23) orienté vers un plan de pièce (21) s'étendant perpendiculairement à l'axe longitudinal (17), lequel renfoncement est délimité par une surface annulaire (25) s'étendant autour de l'axe longitudinal (17), et le renfoncement (23) étant pourvu d'une ouverture traversante (19) s'étendant le long de l'axe longitudinal (17), dont le diamètre est inférieur à celui de l'évidement (23),
l'épaulement creux (15) étant entraîné en rotation,
le matériau à appliquer étant amené dans le renfoncement (23) par l'ouverture traversante (19),
le matériau d'application amené étant plastifié dans le renfoncement (23) et,
le dispositif d'application (1) étant déplacé sur la zone de surface (9) de la pièce (7) de telle sorte que le renfoncement (23) soit dirigé vers la zone de surface (9) et que le plan de la pièce (21) s'étende tangentiellement à la zone de surface (9) au point où l'axe longitudinal (17) coupe la zone de surface (9), et que la surface annulaire (25) soit espacée de la zone de surface (9), de sorte que le matériau d'application plastifié soit déposé sur la zone de surface (9),
**caractérisé en ce que**
l'épaulement creux (15) présente une surface de friction (27) qui est disposée entre la surface annulaire (25) et l'ouverture traversante (19),
la surface de friction (27) entourant l'ouverture traversante (19), de sorte que le matériau d'application introduit dans le renfoncement (23) est alimenté en continu en énergie de frottement par la rotation de l'épaulement creux (15), en raison du frottement entre l'épaulement creux (15) et le matériau d'application, de sorte que cet apport d'énergie plastifie le matériau d'application dans le renfoncement (23).

11. Procédé selon la revendication 10,
dans lequel un élément supplémentaire (35), de préférence fait en le matériau d'application, est fixé sur la zone de surface (9) de la pièce (7),
dans lequel, avant que le dispositif d'application (1) ne soit déplacé sur la zone de surface (9) de la pièce (7), le dispositif d'application (1) est placé sur la zone de surface (9) de telle sorte que l'élément supplémentaire (35) soit reçu dans le renfoncement (23) de telle sorte qu'il s'applique contre l'épaulement creux (15) ,
dans lequel l'épaulement creux (15) est entraîné en rotation de sorte que l'épaulement creux (15) frotte contre l'élément supplémentaire (35) et que l'élément supplémentaire (35) soit plastifié, et
dans lequel, lorsque l'élément auxiliaire (35) est plastifié, le matériau d'application est guidé à travers l'ouverture traversante (19) dans le renfoncement (23) et le dispositif d'application (1) est déplacé sur la zone de surface (9) de la pièce (7).

12. Procédé selon la revendication 10,
dans lequel il est prévu un élément de friction (47) qui est entraîné en rotation autour d'un axe de rotation (51), le dispositif d'application (1) étant apte à être orienté par rapport à l'élément de friction (47) de telle sorte que l'axe de rotation (51) est agencé de manière à être perpendiculaire au plan de la pièce (21) lorsque l'axe longitudinal (17) coupe l'élément de friction (47) et que le plan de la pièce (21) coïncide avec la surface (49) de l'élément de friction (47), et
la surface (49) de l'élément de friction (47) étant directement adjacente à la zone de surface (9) de la pièce (7) de telle sorte que les plans tangentiels de la surface (49) de l'élément de friction (47) et de la zone de surface (9) coïncident à la limite entre la zone de surface (9) et la surface (49) de l'élément de friction (47),
le dispositif d'application (1), avant que le dispositif d'application (1) ne soit déplacé sur la zone de surface (9) de la pièce (7), étant placé sur l'élément de friction (47), de sorte que le matériau d'application guidé dans le renfoncement (23) entre en contact par frottement avec l'élément de friction (47) et que le matériau d'application est plastifié, et
le dispositif d'application (1), lorsque le renfoncement (23) est rempli de matériau d'application plastifié, étant déplacé sur la zone de surface (9) de la pièce (7) et le matériau d'application est guidé à travers l'ouverture traversante (19) dans le renfoncement (23).

13. Procédé selon l'une des revendications 11 à 12,
dans lequel le matériau d'application est amené en forme de bâtonnet le long de l'axe longitudinal (17) à travers l'ouverture traversante (19) dans le renfoncement (23).

14. Procédé selon l'une des revendications 11 à 12, dans lequel le matériau d'application est amené sous forme de poudre à travers l'ouverture traversante (19) dans le renfoncement (23).
